(19) Europäisches Patentamt
European Patent Office
Office européen des brevets

(11) **EP 1 419 875 B1**

(12) **EUROPEAN PATENT SPECIFICATION**

(45) Date of publication and mention
of the grant of the patent:
**11.04.2012 Bulletin 2012/15**

(51) Int Cl.:
*B29C 70/54* (2006.01)      *B29C 70/22* (2006.01)
*D03D 15/00* (2006.01)      *B29C 70/48* (2006.01)

(21) Application number: **03257156.4**

(22) Date of filing: **13.11.2003**

(54) **Reinforcing fiber substrate and composite material obtained therefrom**

Faserverstärkendes Substrat und daraus herhaltener Verbundwerkstoff

Substrat de renfort à base de fibres, matériau composite obtenu à partir dudit substrat

(84) Designated Contracting States:
**DE ES FR GB IT**

(30) Priority:  **14.11.2002  JP 2002330409**
             **13.06.2003  JP 2003169243**
             **13.06.2003  JP 2003169244**

(43) Date of publication of application:
**19.05.2004  Bulletin 2004/21**

(73) Proprietor: **TORAY INDUSTRIES, INC.**
**Tokyo 103-8666 (JP)**

(72) Inventors:
• **Wadahara, Eisuke**
  **Masaki-cho, Iyo-gun**
  **Ehime 791-3120 (JP)**
• **Honma, Kiyoshi**
  **Omihachiman-shi**
  **Shiga, 523-0041 (JP)**
• **Horibe, Ikuo**
  **Matsuyama-shi**
  **Ehime 791-0121 (JP)**
• **Nishimura, Akira**
  **Iyo-gun**
  **Ehime 791-3120 (JP)**

(74) Representative: **Webster, Jeremy Mark et al**
**Mewburn Ellis LLP**
**33 Gutter Lane**
**London**
**EC2V 8AS (GB)**

(56) References cited:
**EP-A- 0 270 411      EP-A- 0 272 083**
**EP-A- 0 909 845      US-A- 4 066 106**
**US-A- 5 358 767**

**Description**

The present invention relates to a composite material excellent in handling property, mechanical properties (particularly, compressive strength) and dimensional accuracy, and to a reinforcing fiber substrate capable of obtaining such a composite material with a good productivity.

Composite materials formed by impregnating matrix resins into reinforcing fibers have been used mainly in the fields of aerospace and sport, for example, because they can satisfy requirements for high mechanical properties and weight saving. As typical methods for producing composite materials, autoclave molding, resin transfer molding (RTM) and vacuum injection molding are known. In autoclave molding, for example, prepregs, each of which is prepared by pre-impregnating a matrix resin into a group of reinforcing fiber bundles arranged in one direction beforehand, are stacked in a mold, covered with a bag material as needed, and heated and pressed in an autoclave to mold a composite material. In this molding method, since a high-quality composite material with few voids and high reliability can be obtained, it is preferably employed for molding parts of aircraft and the like, but there is a problem of high production costs.

On the other hand, typical methods for molding composite materials at high productivity include resin transfer molding (RTM) and vacuum assisted injection molding. In such molding methods, a plurality of dry substrates, which are not impregnated with matrix resin, are placed in a mold, and by injecting a low-viscosity liquid matrix resin, the matrix resin is impregnated into reinforcing fibers to mold a composite material.

In such a molding method by injecting a matrix resin, however, although the productivity of the composite material is generally excellent, because the substrate used is dry, there is a problem that the layer of the substrate in the composite material molded is hard to straighten, namely, that the layer of the substrate is likely to be waved. This waviness of the substrate layer is significant particularly in cases where the lamination structure of substrate layers includes substrate layers laminated such that extending directions of reinforcing fiber bundles of the respective layers are set obliquely to each other (oblique style lamination, e.g., quasi-isotropic laminate). This waviness may reduce the mechanical properties of a composite material obtained therefrom and, especially, remarkably reduce its compressive strength. Further, such a problem is especially significant in a case where one male mold and a female mold and a flexible bag material is used, rather than in cases where both male molds and female molds are used.

Furthermore, in a reinforcing fiber substrate, the bulk (thickness) and the flatness greatly affect the handling property of the substrate and the dimensional stability of a composite material to be obtained. Although it is required to automate the stacking (lamination) of reinforcing fiber substrates in order to further increase the productivity of a composite material, in such a case, particularly the handling property of the substrate becomes important. Thus, it is required that not only merely the weave texture of the substrate does not cause misalignment and slippage, but also the bulk of the substrate is low and the substrate is flat. If the bulk of the substrate is high and the substrate is in a condition irregular in flatness, not only it is difficult to automate the lamination but also a composite material cannot be molded at a desirable dimension.

As known methods, for example, JP-A-2001-226850 and JP-A-2002-249984 disclose a method for supplying a resin emulsion and the like to a reinforcing fiber woven fabric and heat-pressing it in order to fix the weave structure. However, this technology simply serves to prevent reduction of the mechanical properties due to the misalignment and slippage of the weave texture of the woven fabric itself, and it is insufficient for solving the above-described problem that occurs even in a substrate with no waviness. Further, it has not been achieved to efficiently produce a composite material having a desirable dimension.

Thus, a reinforcing fiber substrate for molding a composite material having both desirable mechanical properties (in particular, compressive strength) and dimensional accuracy has not been obtained, and a technology for satisfying such requirements is required.

Furthermore, in injection molding such as RTM and vacuum assisted injection molding, although the productivity of a composite material is excellent, it is necessary to use a reinforcing fiber substrate capable of being handled even in a dry condition, for example, a woven fabric. In a usual woven fabric, because reinforcing fibers are woven in two directions, crimps occur in the reinforcing fibers at the intersections of the warps and the wefts. Such woven fabrics are usually poor in mechanical properties as compared with unidirectional prepreg laminates owing to the reduction in straightness of reinforcing fibers due to the crimps and adhesive property between the warps and wefts and the matrix resin. Thus, in a usual woven fabric, there is a problem that high-level mechanical properties (in particular, compressive strength) such as those required for primary structural elements of aircraft cannot be achieved.

For this problem, proposed is a resin reinforcing material wherein a woven fabric is prepared by using carbon fiber bundles as one of the warps and the wefts and using flexible yarns having a sectional area of 10 % or less of that of the carbon fiber bundle as the other of the warps and the wefts, and a plurality of the woven fabrics are laminated by using a matrix resin (for example, JP-A-59-209847).

However, this woven fabric disclosed in JP-A-59-209847 is in a condition impossible to be used alone (at a single sheet of the woven fabric), and there is a problem that the woven fabric cannot be applied to an injection molding from the viewpoint of handling. Further, this JP-A-59-209847 does not describe at all as to the adhesive property between the warps and wefts and the matrix resin affecting the mechanical properties greatly.

With respect to such a problem of handling property of a substrate, U.S. Patent 5,071,711 proposes a technology wherein a resin material is provided on a woven fabric, the handling property of a dry woven fabric is improved and a preform used for injection molding is stabilized in formation. Further, James C. Seferis, et al. inform that the mechanical properties of a composite material obtained by injection molding are improved by applying a resin material combined with an epoxy resin and elastomer particles onto a woven fabric (for example, Journal of Advanced Materials, Volume 32, No. 3, July 2000, p27-34, and Composites part A. Volume 32, 2001, p721-729).

However, in these proposals, although the handling property of a substrate is improved, the mechanical properties are not increased, or the increase is insufficient. Namely, in spite of a fact that the straightness of reinforcing fibers in a substrate, and further, the properties required for reinforcing fibers to be used, are particularly important factors in order to achieve high mechanical properties, the above-described proposals do not disclose that at all.

Further, recently RTM has been applied to molding of parts of aircraft, etc. because it may enable cost reductions. Especially, in parts of aircraft, because a high fiber content is required in order to exhibit a sufficiently high weight saving effect, the fiber density of dry substrate itself set in a mold must be increased.

However, such a dry substrate strongly compressed has a problem that the impregnation property of a resin decreases and non-impregnated portions are likely to be generated (occur matrix resin starvation), and has a problem that it is difficult to obtain a high-quality composite material required for parts of aircraft.

In a case where a substrate is a bidirectional woven fabric, because openings are formed at intersections of warps and wefts, the gap portions provide resin paths, and therefore, even if substrates are laminated at a thick condition and are strongly compressed, it is possible to impregnate the resin easily. However, because in a bidirectional woven fabric reinforcing fibers are crimped by intersection of warps and wefts, it cannot exhibit a high strength, and it is difficult to apply it to an element requiring high mechanical properties such as a primary structural element for aircraft.

Accordingly, if a substrate is a unidirectional substrate in which reinforcing fibers are arranged in parallel to each other in one direction, because crimps almost are not generated in the reinforcing fibers, exhibition of a high strength can be expected.

However, since a primary structural element for aircraft frequently requires an anisotropy, there may be many portions wherein the above-described unidirectional substrates are laminated in the same direction, and in such a portion, because the reinforcing fibers are arranged densely in the same direction, there are almost no gaps for passing a resin, and it becomes difficult to impregnate the resin.

For the above-described problem, JP-A-8-158665 proposes to provide gaps beforehand between reinforcing fiber yarns forming a reinforcing fiber substrate. In this proposal, although the impregnation property is remarkably improved by providing gaps between yarns, when substrates are laminated at a cross-directional condition, the concave/convex forms ascribed to a difference between the fiber densities of reinforcing fiber yarn portions and gap portions are transferred to each other between adjacent layers of the cross-directional lamination portions, and the reinforcing fiber yarns are waved and the strength property decreases.

From such circumstances, a substrate for resin injection molding capable of achieving both desirable mechanical properties and resin impregnation property is required strongly.

EP-A-0909845 discloses a reinforcing fiber substrate according to the preamble of claim 1 and a composite material according to the preamble of claim 12.

Accordingly, it would be desirable to provide a composite material excellent in handling property, mechanical properties (particularly, compressive strength) and dimensional accuracy, and a reinforcing fiber substrate capable of obtaining such a composite material with a good productivity.

Further, it would be desirable to provide a reinforcing fiber substrate, especially, a unidirectional reinforcing fiber substrate, which is good in impregnation property of a matrix resin, which can obtain a composite material excellent in mechanical properties (particularly, compressive strength after being applied with an impact, open-hole compressive strength, 0° compressive strength, etc.) with a good productivity and which is excellent in handling property (particularly, formation stability, tack property when laminated, etc.), and a composite material made therefrom, and methods for producing them.

Furthermore, it would be desirable to provide a reinforcing fiber substrate, which can exhibit an excellent resin impregnation property in spite of a high fiber volume fraction (a high $V_f$) and can exhibit excellent mechanical properties, when a composite material requiring a high quality such as a structural element for aircraft is manufactured by impregnating a liquid resin into a dry reinforcing fiber substrate in an injection molding such as RTM or VaRTM (a vacuum assisted RTM), a laminate thereof, a composite material made therefrom, and methods for producing them. Claim 1 discloses a reinforcing fiber substrate according to the present invention.

According to embodiments of the invention, the reinforcing fiber volume fraction $V_{pf}$ of the reinforcing fiber substrate calculated from a thickness of said reinforcing fiber substrate, which is determined based on JIS-R7602, is in a range of 40 to 60 % .

Further embodiments of a reinforcing fiber substrate according to the present invention comprise a reinforcing fiber group arranged with reinforcing fiber yarns in parallel to each other in one direction, and in who can spacer yarns each having a concave/convex surface are arranged between the reinforcing fiber yarns, and a resin material is adhered at 2 to 20 % by weight at least to one surface of the reinforcing fiber group. A second aspect of the invention provides a composite material according to claim 12.

As reinforcing fiber substrates according to the first aspect of the invention a structure may be employed wherein the yield of the reinforcing fiber yarn is in a range of 350 to 3,500 tex, the number of filaments of the reinforcing fiber yarn is in a range of 6,000 to 50,000, the substrate is formed by the reinforcing fiber yarn group and a weft-direction auxiliary yarn group in which continuous auxiliary yarns extend in a direction across the reinforcing fiber yarns, and the substrate is a unidirectional reinforcing fiber substrate the areal weight of reinforcing fiber yarns of which is in a range of 1 20 to 320 g/m$^2$.

Furthermore, a structure may be employed wherein the substrate has a warp-direction auxiliary yarn group formed by auxiliary yarns extending in a direction parallel to the reinforcing fiber yarns, and in this case, it is preferred that the yield of the auxiliary yarn forming the warp--direction auxiliary yarn group is 20 % or less of the yield of the reinforcing fiber yarn.

Furthermore, a structure may also be employed wherein spacer yarns are arranged as the warp-direction auxiliary yarns. A structure may be employed wherein the spacer yarn is formed as a yarn in which at least two threads are twisted so that the surface of the yarn has a concave/convex form. Furthermore, a structure wherein the spacer yarn is formed as a covering yarn or a glass fiber yarn may be employed. As the spacer yarn, it is preferred that the ratio of maximum yarn width to minimum yarn width of the spacer yarn is 1.2 or more.

Furthermore, a structure may be employed wherein the substrate has a warp-direction auxiliary yarn group formed by auxiliary yarns extending in a direction parallel to the reinforcing fiber yarns, a weft-direction auxiliary yarn group is disposed on each surface of the substrate, and the substrate is formed as a unidirectional noncrimp woven fabric the weave structure of which is formed by auxiliary yarns forming the warp-direction auxiliary yarn group and auxiliary yarns forming the weft-direction auxiliary yarn group.

In such embodiments, it is preferred that a mean gap between adjacent reinforcing fiber yarns is in a range of 0.1 to 1 mm.

Further, a structure may be employed wherein the substrate is formed by the reinforcing fiber yarn group and the weft-direction auxiliary yarn group in which continuous auxiliary yarns extend in a direction across the reinforcing fiber yarns, and the areal weight of the reinforcing fiber yarn group is in a range of 100 to 400 g/m$^2$, and the areal weight of the weft-direction auxiliary yarn group is 0.7 % or less of the areal weight of the reinforcing fiber yarn group.

Further, a structure may be employed wherein the substrate is formed by the reinforcing fiber yarn group and the warp-direction auxiliary yarn group in which continuous auxiliary yarns extend in a direction parallel to the reinforcing fiber yarns, and the areal weight of the reinforcing fiber yarn group is in a range of 100 to 400 g/m$^2$, and the areal weight of the warp-direction auxiliary yarn group is 12 % or less of the areal weight of the reinforcing fiber yarn group

In further embodiments of the present invention, a structure may be employed wherein the resin material is studded on a surface of the reinforcing fiber substrate, a mean diameter of the studded resin material on the surface of the reinforcing fiber substrate, viewed in plane, is 1 mm or less, and a mean height of the studded resin material from the surface of the reinforcing fiber substrate is in a range of 5 to 250 $\mu$m. Further, a structure may be employed wherein the resin material adheres to the reinforcing fiber substrate at a fiber-like condition.

Further, a structure may be employed wherein the resin material extends in a direction nearly perpendicular to the extending direction of the reinforcing fiber yarns and the resin material adheres with a gap to each other.

Further, it is preferred that a sizing (collecting) treatment is performed on the auxiliary yarns forming the warp-direction auxiliary yarn group.

In the above-described reinforcing fiber substrates according to the first aspect, the main constituent of the auxiliary yarn or the resin material may be at least one selected from the group consisting of polyamide, polyphenylenesulfide, polyetherimide, polyethersulfone, polyketone, polyetheretherketone, phenol, polysulfone, polyphenyleneether, polyimide, polyamideimide and phenoxy.

Further, it is preferred that, when a composite material is molded using the reinforcing fiber substrate and the section of the composite material perpendicular to an extending direction of reinforcing fiber yarns is observed, a rate te/tc of a thickness of a reinforcing fiber yarn te at an end portion in the width direction of the reinforcing fiber yarn to a thickness of a reinforcing fiber yarn tc at a center portion in the width direction of the reinforcing fiber yarn is in a range of 0.3 to 1.

Furthermore it is preferred that, when a composite material having a reinforcing fiber volume fraction of 53 to 65 % is molded, the composite material satisfies at least two of the following properties (a) to (d):

(a) a compressive strength at a room temperature after impact at an impact energy of 6.67 J/mm determined by a method defined in SACMA-SRM-2R-94 is 240 MPa or more;
(b) a non-hole compressive strength at a room temperature using a laminate having a lamination structure defined in SACMA-SRM-3R-94 is 500 MPa or more;

(c) a 0° compressive strength at a room temperature determined by a method defined in SACMA-SRM-1R-94 is 1,350 MPa or more, and a 0° compressive strength at a high temperature after a hot/wet conditioning determined by the method is 1,100 MPa or more; and (d) an open-hole compressive strength at a room temperature determined by a method defined in SACMA-SRM-3R-94 is 270 MPa or more, and an open-hole compressive strength at a high temperature after a hot/wet conditioning determined by the method is 215 MPa or more.

The above-described reinforcing fiber substrates according to the first aspect are preferably reinforcing fiber substrates used for vacuum assisted injection molding. Namely, the reinforcing fiber substrate according to the present invention is excellent in handling property in a dry state, and because high mechanical properties can be exhibited even in a composite material molded by a vacuum assisted injection molding such as RTM (Resin Transfer Molding), RFI (Resin Film Infusion), RIM (Resin Injection Molding), vacuum assisted RTM, etc. described later, it is preferred to mold a composite material from the substrate through such a vacuum injection molding.

Furthermore, reinforcing fiber substrates according to the present invention may be used for formation of a preform in which a plurality of substrates are stacked and integrated.

Furthermore, in the composite material according to the present invention, it is preferred that a maximum cross-sectional waviness of a layer of a reinforcing fiber substrate in a section of the composite material is 0.3 mm or less. The maximum cross-sectional waviness in the present invention means a difference between a highest position and a lowest position of the layer of the substrate to be determined in the section of the composite material cut in parallel to the substrate layer to be determined. Where, in the sampling for the determination, a mean value of four measurements on the 150 mm-length section arbitrarily selected is used.

Furthermore, in the composite material according to the present invention, it is preferred that weft-direction auxiliary yarns extending in a direction across the reinforcing fiber yarns are provided, and the cross-sectional area of the weft-direction auxiliary yarns is 1/50 or less of the cross-sectional area of the reinforcing fiber yarns. Namely, in order to exhibit high mechanical properties, the cross-sectional area of the weft-direction auxiliary yarns is 1/50 or less of the cross-sectional area of the reinforcing fiber yarns. If the sectional area is more than the above-described value, there is a fear that crimps of the reinforcing fiber yarns are induced and high mechanical properties are not exhibited. Where, the cross-sectional area means a sectional area of a yarn observed in a section perpendicular to the arrangement direction of the yarn, and in a case where the yarn is formed by three or more single fibers, it means an area of a region formed by connecting the centers of the outermost single fibers of the yarn by straight lines. In a case where the yarn is formed by two or less single fibers, it means the sum of the sectional areas of the single fibers.

The composite material according to the present invention is used, for example, as a structural element for aircraft, vehicles or ships.

In a method for producing a reinforcing fiber substrate the reinforcing fiber substrate is formed by at least reinforcing fiber yarns arranged in parallel to each other in one direction and includes a resin material, whose main constituent is a thermoplastic resin, provided at 2 to 15 % by weight at least on one surface of the reinforcing fiber substrate, the method comprises the steps of:

(A) a drawing step for drawing the reinforcing fiber yarns;
(B) a substrate forming step for forming a substrate form;
(C) a pressing step for pressing the substrate and controlling the thickness of the substrate so that the reinforcing fiber volume fraction $V_{pf}$ of the reinforcing fiber substrate calculated from a thickness of the reinforcing fiber substrate, which is determined based on JIS-R7602, is in a range of 40 to 60 %;
(D) a cooling step for cooling the substrate and fixing the resin material; and
(E) a winding step for winding the substrate.

In the above-described cooling step, the substrate is cooled at a temperature of a fluidization starting point of the resin material or the glass transition temperature or lower. Because the resin material is quickly solidified through such a cooling step as compared with natural cooling, the substrate pressed at the pressing step is fixed by the resin material, and a spring back of the reinforcing fiber yarns can be minimized.

In the reinforcing fiber substrate formed in the above-described substrate forming step, it is preferred that the reinforcing fiber volume fraction $V_{pf}$ of the reinforcing fiber substrate calculated from a thickness of the reinforcing fiber substrate, which is determined based on JIS-R7602, is 40 % or less. Further, the above-described pressing step comprises, for example, a step in which the thickness of the substrate is reduced by continuously applying a pressure to the substrate via a roller. Further, in the pressing step, the thickness of the substrate may be smallened by discontinuously applying a pressure to the substrate via a plate.

Also, in the above-described pressing step, it is preferred that the surface of a roller or a releasing sheet directly brought into contact with the substrate has a concave/convex form of 5 to 500μm. By providing such a concave/convex form, the substrate can be conveyed in the direction of winding while the substrate is pressed. An unexpected advantage can be preferably obtained that the concave/convex form is transferred to the substrate and the transferred concave/convex form becomes a resin path of a matrix resin in a vacuum assisted injection molding described later. Furthermore, by such a concave/convex form, even if there is a slight difference in yarn length between respective reinforcing fiber yarns in the substrate, the substrate may be continuously sent to a next step while the state is maintained, and the difference in yarn length is not accumulated in the pressing step. Namely, when the substrate is pressed merely by a flat roller, the difference in yarn length may be accumulated in the pressing step, finally the accumulated difference may form a misalignment of a yarn, and it may be sent to a next step at a time. This misalignment becomes a great defect in the substrate, and it induces a great deficiency with respect to mechanical properties. Here, a preferable concave/convex form is in a range of 10 to 250$\mu$m, more preferably in a range of 15 to 100$\mu$m.

A method for producing a composite material comprises the steps of:

preparing a reinforcing fiber substrate, formed by at least reinforcing fiber yarns arranged in parallel to each other in one direction and including a resin material, whose main constituent is a thermoplastic resin, provided at 2 to 15 % by weight at least on one surface of the reinforcing fiber substrate, by a method comprising the steps of:

(A) a drawing step for drawing the reinforcing fiber yarns;
(B) a substrate forming step for forming a substrate form;
(C) a pressing step for pressing the substrate and controlling the thickness of the substrate so that the reinforcing fiber volume fraction $V_{pf}$ of the reinforcing fiber substrate calculated from a thickness of the reinforcing fiber substrate, which is determined based on JIS-R7602, is in a range of 40 to 60 %;
(D) a cooling step for cooling the substrate and fixing the resin material; and
(E) a winding step for winding the substrate;

molding a composite material, the reinforcing fiber volume fraction $V_f$ of which calculated from a thickness of the composite material is in a range of 50 to 65 %, by placing the prepared reinforcing fiber substrate in a cavity formed by a mold and a bag material and impregnating a resin into the substrate by reducing a pressure in the cavity.

In this method, it is preferred that the composite material is molded so that a maximum cross-sectional waviness of a layer of a reinforcing fiber substrate in a section of the composite material is 0.3 mm or less.

In embodiments of the reinforcing fiber substrate as the reinforcing fiber volume fraction $V_{pf}$ of the reinforcing fiber substrate is controlled at an optimum value, a reinforcing fiber substrate for obtaining a composite material excellent in mechanical properties particularly such as a compressive strength after impact at a room temperature (CAI), a non-hole compressive strength at a room temperature (NHC), 0° compressive strength at a room temperature (CS) and an open-hole compressive strength at a room temperature (OHC), can be obtained.

Also, in the reinforcing fiber substrate according to the first aspect, the impregnation property of a matrix resin is good, and not only a composite material excellent in mechanical properties particularly such as a compressive strength after being applied with an impact or after a hot/wet conditioning can be obtained at a high productivity, but also a unidirectional reinforcing fiber substrate excellent in formation stability and handling property such as tack property at the time of lay down (lamination), and a composite material molded by impregnating a matrix resin into such a unidirectional reinforcing fiber substrate, can be obtained.

In the reinforcing fiber substrate according to some embodiments, as spacer yarns having concave/convex surfaces are arranged between the reinforcing fiber yarns, a path for a liquid resin in the thickness direction of the substrate is formed by the concave portion of the surface of the spacer yarn, and even if the substrates are laminated at a large thickness, an excellent resin impregnation property is exhibited, and therefore, a high-quality composite material can be obtained. Also, because spacer yarns exist between the reinforcing fiber yarns, there is almost no difference in thickness between the portion of the reinforcing fiber yarn and the portion between the reinforcing fiber yarns and the substrate can have a uniform thickness, and even in a lamination, the respective layers do not deflect (wave), and therefore, a composite material exhibiting high mechanical properties can be obtained. Further, because the resin material is adhered at least on one surface of the reinforcing fiber substrate, the substrate can be stabilized by the bonding effect due to the resin material, and an integration to form a preform can be easily performed. Furthermore, the portion between the layers in the preform can be filled with the resin material, and a composite material having a high toughness at interlamina can be obtained.

The composite material thus obtained is suitable for broad various fields including structural elements, interior parts or outside parts for conveying equipment such as aircraft, vehicles and ships and other various bodies, and in particular, suitable for structural elements for aircraft.

Further objects, features, and advantages of the present invention will be understood from the following detailed description of preferred embodiments of the present invention with reference to the accompanying figures.

Embodiments of the invention are now described with reference to the accompanying figures, which are given by way of example only, and are not intended to limit the present invention.

Fig. 1 is a sectional view of a composite material for explaining a maximum cross-sectional waviness of a substrate in a section of the composite material used in the present invention.

Fig. 2 is a schematic plan view of a reinforcing fiber substrate according to an embodiment of the present invention.

Fig. 3 is a schematic vertical sectional view of a reinforcing fiber substrate according to another embodiment of the present invention.

Fig. 4 is a schematic perspective view of an example of a fabric used for a reinforcing fiber substrate according to the present invention.

Fig. 5 is a schematic perspective view of another example of a fabric used for a reinforcing fiber substrate according to the present invention.

Fig. 6 is a schematic perspective view of an airplane showing an example of portions to be applied with a reinforcing fiber substrate according to the present invention.

Fig. 7 is a schematic perspective view of a structural element showing another example to be applied with a reinforcing fiber substrate according to the present invention.

Fig. 8 is a schematic plan view of a reinforcing fiber substrate according to a further embodiment of the present invention.

Fig. 9 is a schematic plan view of a reinforcing fiber substrate according to a still further embodiment of the present invention.

Fig. 10 is a schematic plan view of a reinforcing fiber substrate which does not unstrate the present invention.

Fig. 11 is a schematic plan view of a reinforcing fiber substrate which does not unstrate the present invention.

Fig. 12 is a plan view of an example of a spacer yarn used for a reinforcing fiber substrate according to the present invention.

Fig. 13 is a plan view of an example of a laminate of reinforcing fiber substrates according to the present invention.

Fig. 14 is a schematic vertical sectional view of an example of an apparatus for molding a composite material using a reinforcing fiber substrate according to the present invention.

Hereinafter, the present invention will be explained in more detail together with desirable embodiments.

First, an example of a reinforcing fiber substrate and a composite made therefrom will be explained. The reinforcing fiber substrate according to this example is a reinforcing fiber substrate formed by at least a reinforcing fiber yarn group arranged with continuous reinforcing fiber yarns in parallel to each other in one direction, and in the substrate, a resin material whose main constituent is a thermoplastic resin is provided at 2 to 15 % by weight at least on one surface of the reinforcing fiber substrate, and the reinforcing fiber volume fraction $V_{pf}$ of the reinforcing fiber substrate calculated from a thickness of the reinforcing fiber substrate, which is determined based on JIS-R7602, is in a range of 40 to 60%.

Here, the thickness of the reinforcing fiber substrate determined based on JIS-R7602 means a thickness determined based on the "Testing Methods for Carbon Fiber Woven Fabrics" described in JIS-R7602. Concretely, a substrate is placed on a level block, and thereon, a load of 510 gf (50 kPa) is applied via a circular plate of 1 cm$^2$ (pressing plate) and that state is kept for at least 20 seconds, a gap between the level block and the circular plate is measured by a dial gauge up to two figures from a decimal point with a unit of mm. As a substrate served to the determination, used is a substrate which expires in time at least 24 hours after production and the amount of spring back of which is substantially saturated.

The above-described reinforcing fiber substrate has a resin material, whose main constituent is a thermoplastic resin, at 2 to 15 % by weight at least on one surface of the substrate, preferably at 6 to 14 % by weight, more preferably at 8 to 13 % by weight. By providing the resin material in such a range, a further high formation stability of the substrate can be obtained. Further, when substrates are stacked, a tack property (adhesive property) between the substrates and an appropriate stiffness of the substrate are given. As a result, a reinforcing fiber substrate excellent in formation stability, easy to be laminated and capable of being automated, can be obtained. Such properties are hard to be exhibited at an amount less than 2 % by weight.

Furthermore, the resin material adhering to at least one surface of the substrate with the above-described amount functions as a crack stopper in a composite material which is obtained by laminating the reinforcing fiber substrates. In particular, when the composite material is applied with an impact, the resin material functions to suppress a damage, and it gives excellent mechanical properties (particularly, a compressive strength after impact) to the composite material, so-called effect for interlamina toughening can exhibit. Even if the resin material adheres a portion except the surface, it functions to release an interior residual stress in the composite material, and contributes to increase the mechanical properties.

When the substrates are laminated, in addition to such an effect for increasing the stiffness, the resin material adhered on the surface becomes a spacer, and a space is formed between adjacent substrate layers in the thickness direction. When a composite material is molded by resin injection molding, such a space functions as a flow path of a matrix resin, and it exhibits an effect for forming a flow path at a portion between layers. By this effect, not only the impregnation of the matrix resin is facilitated but also the impregnation speed becomes high.

If the amount of the resin material is more than 15 % by weight, not only it is difficult to control the reinforcing fiber volume fraction $V_{pf}$ described later within 40 to 60 %, but also the reinforcing fiber volume fraction $V_f$, when a composite material is molded, becomes too low. Further, the resin material is likely to break the resin flow path, and there may be a case obstructing the resin impregnation.

Although such a resin material adheres to at least one surface of the substrate, it may adhere to both surfaces of the substrate. The former style is preferable for producing the reinforcing fiber substrate more inexpensively. In a case where the reinforcing fiber substrate is intended to be used without discriminating the surface and the back surface of the substrate, the latter style is preferable. Both styles can be selected depending upon the usage. Further, although the resin material may adhere in the interior of the reinforcing fiber yarn (between reinforcing single fibers), because the above-described effect for reinforcing a portion between layers and effect for forming a flow path at a portion between layers remarkably exhibit particularly by adhesion of the resin on the surface, it is preferred that the resin material exists substantially only on the surface of the substrate. By such an adhesion only on the surface of the substrate, the adhesion amount of the resin material can be minimized.

Another feature of the reinforcing fiber substrate according to embodiments of the present invention is in that the reinforcing fiber volume fraction $V_{pf}$ of the reinforcing fiber substrate calculated from a thickness of the reinforcing fiber substrate, which is determined based on JIS-R7602, is in a range of 40 to 60 %, preferably in a range of 43 to 58 %, more preferably in a range of 52 to 56 %.

If the reinforcing fiber volume fraction $V_{pf}$ is less than 40 %, particularly in vacuum assisted injection molding where a matrix resin is impregnated by a vacuum pressure, because a pressure more than an atmospheric pressure does not apply at the time of molding, the bulk of the reinforcing fiber substrate, that is, the reinforcing fiber volume fraction $V_{pf}$ cannot be controlled within a desirable range, and therefore, not only the reinforcing fiber volume fraction $V_f$ of a composite material to be obtained also cannot be controlled within a range of 50 to 65 % optimum for mechanical properties, but also a composite material having a desirable dimension cannot be obtained. Further, the layer of the substrate in the composite material is waved, and the mechanical properties of the composite material obtained, particularly, the compressive strength, is remarkably reduced. Such problems are particularly remarkable in a case of oblique style lamination (e.g., quasi-isotropic laminate) as to substrate lamination structure, and as to molding, particularly remarkable in a case where one of a male mold and a female mold used and a flexible bag material is used as the other. Namely, a composite material excellent in mechanical properties and capable of exhibiting high weight saving effect cannot be obtained. Furthermore, because the bulk of the substrate is high and the flatness is poor, when the lamination of substrates is automated, both the thickness and the plane direction cannot be positioned accurately, and a stable automatic lamination becomes difficult.

On the other hand, if the reinforcing fiber volume fraction $V_{pf}$ is more than 60 %, in a case of injection molding, as the result that reinforcing fibers charged too densely obstruct the flow of a matrix resin, the impregnation property deteriorates, and only a composite material having a non-impregnated portion (causing matrix resin starvation) and poor in mechanical properties can be obtained.

By controlling the reinforcing fiber volume fraction $V_{pf}$ within the range of 40 to 60 %, it becomes possible to control the reinforcing fiber volume fraction $V_f$ and the dimension of a composite material to be obtained strictly in desirable ranges and exhibit high mechanical properties. Namely, the subject of the present invention can be achieved only when the reinforcing fiber volume fraction $V_{pf}$ of the reinforcing fiber substrate, having a resin material whose main constituent is a thermoplastic resin at 2 to 15 % by weight at least on one surface of the substrate, is in the range of 40 to 60 %. In the present invention, because the resin material is a thermoplastic resin, the restraint of the reinforcing fibers due to the resin material can be once released by heating, the reinforcing fiber substrate, the reinforcing fiber yarns and ultimately the single fibers of the reinforcing fibers can be charged in a desirable range, and they can be re-restricted at such a charge level by cooling. By this mechanism, the reinforcing fiber volume fraction $V_{pf}$ in the reinforcing fiber substrate can be controlled within the above-described range.

In the present invention, the reinforcing fiber volume fraction $V_{pf}$ in the reinforcing fiber substrate means a value calculated from the following equation (unit: %). Where, a reinforcing fiber substrate served to the determination is a substrate which expires in time at least 24 hours after production and the amount of spring back of which is substantially saturated.

$$V_{pf} = W1 \, / \, (\rho \times T1 \times 10) \qquad (\%)$$

W1: areal weight of reinforcing fibers per 1 $m^2$ reinforcing fiber substrate (g/$m^2$)

p : density of reinforcing fibers (g/cm$^3$)

T1: thickness of reinforcing fiber substrate determined based on JIS-R7602 (mm)

Here, as the resin material, for example, a material is preferable which has a form such as a powder-like material and which does not cover the entire surface of the substrate. In particular, a studded formation is preferred from the viewpoints that the impregnation property of a matrix resin is excellent, that the reinforcing fiber volume fraction of a composite material to be molded can be increased, and that the dispersion of the moisture component of the resin material can be minimized.

In the resin material having such a studded formation, it is preferred that a mean diameter of the dots (a mean short diameter in a case of an oval) observed from the surface of the substrate is 1 mm (1,000 $\mu$m) or less, particularly in a range of 10 to 1,000 $\mu$m, more preferably in a range of 20 to 500 $\mu$m, and further more preferably in a range of 50 to 250 $\mu$m. If less than 10 $\mu$m, there may be a case where the impregnation property is damaged such as a condition where the studded-form resin material enters into a portion between single fibers. If more than 1,000 $\mu$m, there may be a case where the uniformity of the dispersion condition of the resin material reduces. Further, if the amount of the concave/convex form of the resin material adhered to the substrate surface in a direction perpendicular to the surface of the substrate is too great, a reinforcing fiber yarn adjacent in the thickness direction is likely to be waved. From such a viewpoint, a mean thickness (a mean height) of the resin material studded on the surface of the substrate from the surface of the substrate is preferably in a range of 5 to 250 $\mu$m, more preferably in a range of 5 to 100 $\mu$m, and further more preferably in a range of 10 to 80 $\mu$m.

The main constituent of the resin material, namely, constituent of more than 50 % by weight of the resin material (preferably, 60 to 100 % by weight) is a thermoplastic resin exhibiting the above-described effect for reinforcing a portion between layers. As needed, a small amount of sub-component such as a tackifier or a plasticizer may be combined, and the glass transition temperature may be controlled at a temperature in a range of 0 to 150˚C, preferably in a range of 30 to 100˚C. If such a sub-component is one similar to or resembling to a matrix resin, there is an advantage that the adhesive property and the compatibility with the matrix resin are excellent. Such a thermoplastic resin is preferably at least one compound selected from the group consisting of, for example, polyamide, polyphenylenesulfide, polyetherimide, polyethersulfone, polyketone, polyetheretherketone, phenol, polysulfone, polyphenyleneether, polyimide, polyamideimide and phenoxy. Among these compounds, at least one compound selected from polyamide, polyetherimide, polyphenyleneether and polyethersulfone is particularly preferred.

In the reinforcing fiber substrate according to the present invention, continuous reinforcing fiber yarns are disposed in parallel to each other and arranged at least in one direction to form a reinforcing fiber yarn group. As needed, the arrangement of the reinforcing fiber yarns may be in two or more directions. Namely, any of a unidirectional substrate, bidirectional substrate and multi-directional substrate may be available. The style of these reinforcing fiber substrates may be any of, for example, a woven structure, a knit structure or a non-woven sheet, and a combination thereof. Among these, in order to obtain a composite material capable of being applied to a primary structural element of aircraft, etc. requiring an excellent weight saving effect and remarkably high mechanical properties, the substrate is preferably a unidirectional substrate in which reinforcing fiber yarns are arranged only in one direction.

As such a unidirectional substrate, a unidirectional reinforcing fiber substrate is preferred wherein the yield of the reinforcing fiber yarn is in a range of 350 to 3,500 tex, the number of filaments of the reinforcing fiber yarn is in a range of 6,000 to 50,000, the substrate is formed by the reinforcing fiber yarn group and a weft-direction auxiliary yarn group in which continuous auxiliary yarns extend in a direction across the reinforcing fiber yarns, and the areal weight of reinforcing fiber yarns is in a range of 120 to 320 g/m$^2$. If the areal weight is less than 120 g/m$^2$, because the reinforcing fiber yarns in the substrate are too coarse and many resin-rich portions are formed, not only the mechanical properties are poor, but also there may be a case poor in handling property for the substrate. On the other hand, if the areal weight is more than 320 g/m$^2$, because the reinforcing fiber yarns are arranged too densely, not only the resin impregnation property becomes poor, but also in a composite material formed by laminating a plurality of substrates, there may be a case where one layer becomes too thick (a space between layers becomes too small and the number of interlamina also becomes too small), a stress concentration in interlamina occurs and the mechanical properties of the composite material becomes poor.

Further, the continuous auxiliary yarns form a weft-direction auxiliary yarn group by extending across the reinforcing fiber yarns, namely, extending in a direction perpendicular to the reinforcing fiber yarns, or extending in a direction across obliquely relative to the reinforcing fiber yarns. The formation stability of the reinforcing fiber substrate is improved by a condition where the auxiliary yarns cross the reinforcing fiber yarns and support the substrate in a direction except the direction arranged with the reinforcing fiber yarns.

The style of such a unidirectional reinforcing fiber substrate may be, for example, a woven structure or non-woven structure wherein continuous auxiliary yarns are arranged in parallel to each other and arranged in one direction, or may be a knit structure wherein auxiliary yarns are arranged at a warp knitting style (for example, 1/1 tricot knitting structure, a hollow style knitting of a chain knitting structure and inserting yarns, etc.) or at a weft knitting style. Further, a sheet may be employed wherein a sheet-like material of continuous or discontinuous auxiliary fibers (a non-woven fabric, a mat, a substrate formed by spun yarns, mesh, etc.) is bonded and integrated by stitching or bonding (chemical, thermal, etc.). Among these, a unidirectional woven fabric, which is a weave structure, is excellent in straightness of reinforcing fiber yarn, in impregnation property of matrix resin, in production stability of substrate and in dimensional stability of substrate, and it is a preferred substrate formation in the present invention.

Here, the yield of auxiliary yarns greatly affects the mechanical properties, particularly, the compressive property, unexpectedly. Thus, the yield of the auxiliary yarns (Ta1) forming the weft-direction auxiliary yarn group in the present invention is 1 % or less of the yield of the reinforcing fiber yarns (Tc), i.e., (Ta1 x 100)/Tc $\leqq$ 1. More preferably it is 0.7 % or less, and further more preferably it is 0.5 % or less. Although such a ratio does not particularly have a lower limit, it is generally 0.01 % or more from the viewpoint of formation stability or stable production of the substrate.

Since such auxiliary yarns are arranged across the reinforcing fiber yarns, intersections are inevitably formed. If Ta1 is more than 1 % of Tc, in such intersections, the auxiliary yarns crimp the reinforcing fiber yarns in the thickness direction, and the straightness of the reinforcing fiber yarns may be damaged. Further, by formation of such crimps, a composite material excellent in mechanical properties, particularly in a compressive property, is hardly obtained. If Ta1 is within the above-described range, although the crimps of the reinforcing fiber yarns are formed slightly, they do not grow up to an extent affecting the straightness, the reduction of the mechanical properties is suppressed at a level to be neglected, and a composite material exhibiting extremely high mechanical properties can be obtained while it has a high reinforcing fiber volume fraction.

As such a unidirectional woven fabric, a woven fabric, wherein a weft-direction auxiliary yarn group is disposed on each surface of the substrate, the auxiliary yarns forming the auxiliary yarn group and the reinforcing fiber yarns forming the reinforcing fiber yarn group form a weave structure (a plain weave, a twill weave, a sateen weave, etc.), can be raised.

In this case, in order to minimize the affection due to the intersections with the reinforcing fiber yarns, the value of the continuous auxiliary weft-direction yarn ends is preferably in a range of 0.3 to 6 yarns/cm, more preferably in a range of I to 4 yarns/cm.

As a more preferable embodiment, a noncrimp woven fabric is raised wherein a warp-direction auxiliary yarn group formed by continuous auxiliary yarns extending in a direction parallel to the reinforcing fiber yarns is provided, a weft-direction auxiliary yarn group is disposed on each surface of the substrate, the auxiliary yarns forming the warp-direction auxiliary yarn group and the auxiliary yarns forming the weft-direction auxiliary yarn group form a weave structure and support the reinforcing fiber yarns integrally.

In a noncrimp woven fabric using such a warp-direction auxiliary yarn group, because the gaps between the reinforcing fiber yarns are buried with the warp-direction auxiliary yarns and the concave/convex formation of the substrate can be flattened, the waviness of the substrate layers laminated in a composite material is suppressed, and higher mechanical properties can be exhibited. Further, a disorder of the reinforcing fiber yarns at the intersections with the auxiliary yarns can be suppressed, and a function like a guide for maintaining the straightness thereof can be expected. By such effect, a composite material extremely excellent in mechanical properties, for example, at a level required for a primary structural element of aircraft, can be obtained.

Here, as the auxiliary yarns forming the warp-direction auxiliary yarn group, carbon fibers or glass fibers, high in tensile elongation at breakage, substantially with no thermal shrinkage, and excellent in line-up of yarn yield, resistance against moisture absorption and cost balance, can be preferably used.

As the reinforcing fiber yarn used in the present invention, as aforementioned, the yield is preferably in a range of 350 to 3,500 tex, and the number of filaments is preferably in a range of 6,000 to 50,000. More preferably, the yield is in a range of 400 to 1,800 tex, and the number of filaments is in a range of 12,000 to 38,000. If the yield is less than 350 tex or the number of filaments is less than 6,000, the reinforcing fiber yarn becomes expensive, and the meaning of the present invention for exhibiting advantage by injection molding excellent in productivity may be lessened. On the other hand, if the yield is more than 3,500 tex or the number of filaments is more than 50,000, misalignment of the single fiber (filament) in the reinforcing fiber yarn becomes great, there may be a case poor in impregnation property. Further, such a reinforcing fiber yarn is preferably a non-twisted yarn in order to exhibit a high reinforcing fiber volume fraction and high mechanical properties of a composite material.

Although the kind of the reinforcing fiber yarn used in the present invention is not particularly restricted, for example, carbon fiber, glass fiber, organic fiber (for example, aramide fiber, polyparaphenylene-benzo-bisoxazole fiber, phenol fiber, polyethylene fiber, polyvinylalcohol fiber, etc.), metal fiber or ceramic fiber, or a combination thereof can be employed. Since the carbon fiber is excellent in specific strength and specific elastic modulus and excellent in resistance against moisture absorption, it can be preferably used as the reinforcing fiber yarn for structural elements of aircraft and vehicles.

In the reinforcing fiber substrate according to the present invention, it is preferred that, when a composite material is molded and the section of the composite material perpendicular to an extending direction of the reinforcing fiber yarns is observed, a rate te/tc of a thickness of a reinforcing fiber yarn te at an end portion in the width direction of the reinforcing fiber yarn to a thickness of a reinforcing fiber yarn tc at a center portion in the width direction of the reinforcing fiber yarn is in a range of 0.3 to 1. If the rate is out of the range, the condition means that the reinforcing fiber substrate substantially is not flat, and there may be a case where the subject of the present invention, that is a waviness of the substrate layer in a composite material causing reduction of mechanical properties, is not solved. When the width of the reinforcing fiber yarn is referred to as W and one end of the reinforcing fiber yarn is referred to as 0, the above-described "center portion" means a position of 0.5W in the width direction. The above-described "end portion" means both positions of 0.1W and 0.9W, and the "thickness of a reinforcing fiber yarn te at an end portion" is an average value of the thickness at 0.1W and the thickness at 0.9W.

In the reinforcing fiber substrate according to the present invention, in order to obtain a composite material having high mechanical properties, the adhesive property between the weft-direction auxiliary yarns and the matrix resin is extremely important, and the higher the adhesive property is, it contributes to exhibit excellent mechanical properties. As indexes directly concerning such an adhesive property, it is preferred that, in a composite obtained by s molding method described examples of the present invention, the reinforcing fiber volume fraction $V_f$ is in a range of 53 to 65 %, and the property of the composite material satisfy at least two of the following factors (a) to (d). More preferably, all the factors (a) to (d) are satisfied. In such a case, an excellent adhesive property can be achieved. Namely, these factors are most important properties among the mechanical properties in the present invention. Where, SACMA is an abbreviation of Suppliers of Advanced Composite Materials Association.

Factor (a): a compressive strength at a room temperature after impact at an impact energy of 6.67 J/mm (CAI) is 240 MPa or more. This CAI is determined at a dry condition based on SACMA-SRM-2R-94.

Factor (b): a non-hole compressive strength at a room temperature (NHC/RT) is 500 MPa or more. This NHC/RT uses a laminate having a lamination structure defined in SACMA-SRM-3R-94 is cut at a width of 25.4 mm and a length of 105.4 mm to prepare a specimen and the upper and lower portions of the specimen are fixed by jigs, respectively, by 40 mm.

Factor (c): a 0˚ compressive strength at a room temperature (CS/RT) is 1 ,350 MPa or more, and a 0˚ compressive strength at a high temperature after a hot/wet conditioning (CS/HW) is 1,100 MPa or more. CS/RT is determined at a dry condition based on SACMA-SRM-1R-94. CS/HW is determined at an atmosphere having a temperature of 82˚C immediately after the same specimen is dipped in hot water at 72˚C for 14 days.

Factor (d): an open-hole compressive strength at a room temperature (OHC/RT) is 275 MPa or more, and an open-hole compressive strength at a high temperature after a hot/wet conditioning (OHC/HW) 215 MPa or more. OHC/RT is determined at a dry condition based on SACMA-SRM-3R-94. OHC/HW is determined at an atmosphere having a temperature of 82˚C immediately after the same specimen is dipped in hot water at 72 ˚C for 14 days.

More concretely, the above-described compressive strength after being applied with an impact (CAI) is determined based on a method described in SACMA-SRM-2R-94 "SACMA Recommended Test Method for COMPRESSION AFTER IMPACT PROPERTIES OF ORIENTED FIBER-RESIN COMPOSITES". Concretely, a substrate is cut, the cut substrates are stacked so that a lamination structure of -45˚/0˚/+45˚/90˚ is repeated three times, two laminates thus constructedare prepared, and a plain plate with a thickness of 4 to 5 mm is molded by bonding the two laminates so that the respective 90˚ layers are confronted to each other at a symmetric layer arrangement (in a case of an areal weight of substrate of 190 g/m$^2$). A specimen with a length of 150 mm and a width of 100 mm is cut out from the plain plate laminate by using a diamond cutter, and after a drop weight impact of 6.67 J/mm (1,500 in · lbs/in) is given by using an exclusive jig and dropping a weight of 5.6 kg (12 lbs) onto the center of the specimen, the compressive strength in 0˚ direction of the specimen is determined using an exclusive jig. The number of specimens is at least n=4, and the average value thereof is employed. The exclusive jig used in CAI test is described in detail in SACMA-SRM-2R-94.

The above-described non-hole compressive strength in a non-hole compression test (NHC) is determined using a laminate having a lamination structure similar to a lamination structure employed in a method for determining an open-hole compressive strength (OHC) described in SACMA-SRM-3R-94 "SACMA Recommended Test Method for OPEN-HOLE COMPRESSION PROPERTIES OF ORIENTED FIBER-RESIN COMPOSITES". Concretely, a substrate is cut, the cut substrates are stacked so that a lamination structure of - 45˚/0˚/+45˚/90˚ is repeated two times, two laminates thus constructed are prepared, and a plain plate with a thickness of 3 mm is molded by bonding the two laminates so that the respective 90˚ layers are confronted to each other at a symmetric layer arrangement (in a case of an areal weight of 190 g/m$^2$). A specimen with a width of 25.4 mm and a length of 105.4 mm is cut out from the plain plate, and a compression test is carried out at a condition where the upper and lower portions of the specimen are fixed by jigs, respectively, by 40 mm. NHC is determined as a compressive strength of the specimen in 0˚ direction using an exclusive jig. The number of specimens is at least n=4, and the average value thereof is employed.

The above-described 0˚ compressive strength (CS) is determined by the method defined in SACMA-SRM-1R-94 "SACMA Recommended Test Method for COMPRESSION PROPERTIES OF ORIENTED FIBER-RESIN COMPOSITES". Concretely, a substrate is cut, and a plain plate with a thickness of I mm is molded by laminating six layers of substrates each having 0˚ lamination structure (in a case of an areal weight of 190 g/m$^2$). Tabs (the same plain plate is preferably used) are bonded on both surfaces of the plain plate laminate at positions except the central portion of the plain plate laminate so that a gap along 90˚ direction is formed at the central portion of the plain plate laminate (namely, only this 4.75 mm gap portion is formed as a portion made of only the above-described 1 mm-thickness plain plate laminate without tabs, and this gap portion is formed as a portion for the compression test). A specimen with a length of 80 mm and a width of 15 mm is cut out from the plain plate laminate with tabs by using a diamond cutter. The compressive strength CS in 0˚ direction of the specimen is determined using an exclusive jig. The number of specimens is at least n=4, and the average value thereof is employed. The exclusive jig used in CS test is described in detail in SACMA-SRM-1R-94.

The above-described open-hole compressive strength (OHC) is determined along a method described in SACMA-SRM-3R-94 "SACMA Recommended Test Method for OPEN-HOLE COMPRESSION PROPERTIES OF ORIENTED FIBER-RESIN COMPOSITES". Concretely, a substrate is cut, the cut substrates are stacked so that a lamination structure of -45˚/0˚/+45˚/90˚ is repeated two times, two laminates thus constructed are prepared, and a plain plate with a thickness of 3 mm is molded by bonding the two laminates so that the respective 90˚ layers are confronted to each other at a symmetric layer arrangement (in a case of an areal weight of 190 g/m$^2$). A specimen is cut out from the above-described plain plate laminate at a length of 305 mm and a width of 38 mm by using a diamond cutter, after a hole having a diameter of 6.35 mm is opened at the center of the specimen, the compressive strength of the specimen in 0˚ direction is determined using an exclusive jig. The number of specimens is at least n=4, and the average value thereof is employed. The exclusive jig used for determination of OHC is described in detail in SACMA-SRM-3R-94. When the hole is opend for OHC test, a glass fiber reinforced plastic plate (GFRP) is bonded on each surface of the specimen by an instantaneous adhesive agent so that the carbon fibers around the hole are not damaged, and a drill and a reamer are used. After opening the hole, the GFRP is removed and the specimen is served to the determination.

Also, "a room temperature" in the present invention means a test condition at which a test is carried out at a temperature 23˚C $\pm$2˚C and a humidity of 50 % $\pm$ 10 %, The "hot/wet conditioning" in the present invention means a test condition at which a specimen is dipped in hot water at 72˚C for 14 days (hot/wet conditioning) and immediately thereafter determined at a high temperature (82˚C).

For example, in a case where an epoxy is a matrix resin, it is preferred to use auxiliary yarns forming a weft-direction auxiliary yarn group which are excellent in adhesive property with the epoxy except in thermal resistance, resistance against moisture absorption and line-up of yarn yield. As preferable materials of the auxiliary yarns for satisfying such requirements, raised are polyamide (6, 66, 9, 12, 610, 612, aromatic group, copolymer thereof, etc.), polyphenylenesulfide, polyetherimide, polyethersulfone, polyketone, phenol and polyimide, and among these, polyamide 66 is particularly preferred.

The composite material according to the present invention is formed by impregnating a matrix resin into the above-described reinforcing fiber substrate, preferably into a laminate of a plurality of the above-described reinforcing fiber substrates, and has a reinforcing fiber volume fraction $V_f$ calculated from a thickness of the composite material in a range of 50 to 65 %. A matrix resin impregnated into the reinforcing fiber substrate is solidified (cured or polymerized) after impregnation, and forms a composite material.

In the composite material according to the present invention, in order to exhibit excellent mechanical properties as much as possible, the reinforcing fiber volume fraction $V_f$ of the composite material calculated from a thickness of the composite material is controlled in a range of 50 to 65 %. If less than 50 %, the composite material is poor in lightening effect, and if more than 65 %, the molding by the injection molding described later becomes difficult, and the composite material cannot be obtained at a high productivity. Where, the reinforcing fiber volume fraction $V_f$ in a composite material means a value calculated from the following equation (unit: %).

$$V_f = (W2 \times Ply) / (\rho \times T2 \times 10) \quad (\%)$$

W2: areal weight of reinforcing fibers per 1 m$^2$ of reinforcing fiber substrate used (g/m$^2$)
T2: thickness of composite material (mm)
Ply: number of layers laminated in reinforcing fiber substrate

It is preferred that a maximum cross-sectional waviness of a substrate layer in a section of a composite material in the present invention is 0.3 mm or less. That such a waviness is large means that a wave of a substrate layer is large, namely, that the reinforcing fibers are poor in straightness, and if more than 0.3 mm, there may be a case where a great reduction of mechanical properties, particularly, a great reduction of a compressive strength, is generated. The smaller such a maximum cross-sectional waviness is, the better it is, but if it is 0.1 mm or less, it is enough in most cases for the purpose of the present invention.

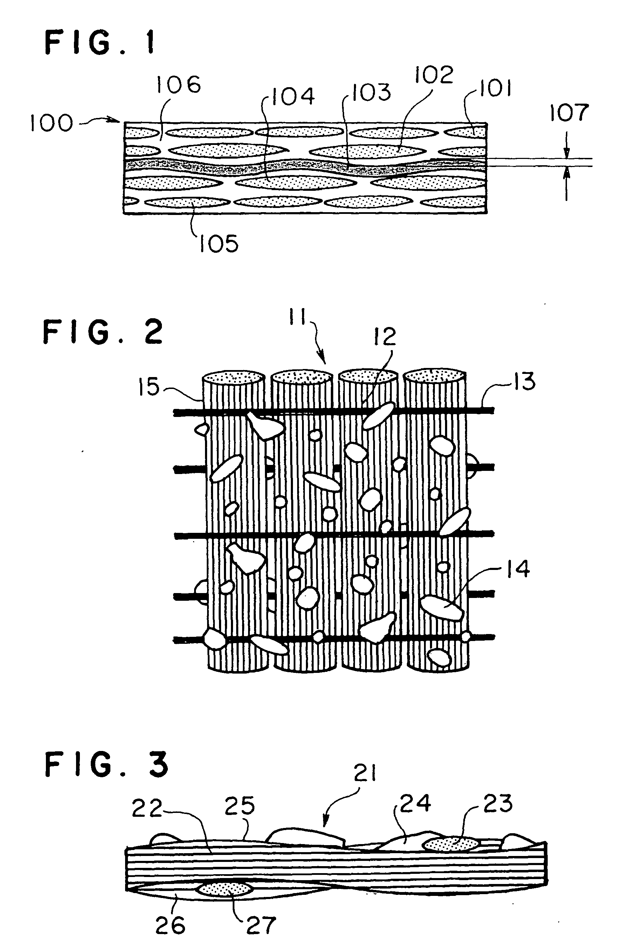

The above-described maximum cross-sectional waviness is represented by a maximum value of a wave of a substrate layer determined in the below-described sampling range of the substrate layer after recognizing one arbitrary substrate layer in a section of a composite material. For example, Fig. 1 shows a section of a composite material according to an embodiment of the present invention. As shown in Fig. 1, in the section of composite material 100, 90˚ layer 101 laminating a reinforcing fiber substrate at 90˚ direction, +45˚ layer 102, 0˚ layer 103, -45˚ layer 104 and 90˚ layer 105 are arranged in order from the upper side, and matrix resin 106 is impregnated. The maximum cross-sectional waviness in the present invention means a difference between the highest position and the lowest position 107 of a layer to be determined (in Fig. 1, 0˚ layer 103 is a layer to be determined.) in a section of a composite material cut in parallel to the layer to be determined. Where, for sampling, an average value of four times measurements in a section with a length of 150 mm arbitrarily selected is used.

Although thermoplastic and thermosetting resins can be both used as a matrix resin for the composite material according to the present invention, the matrix resin is preferably a thermosetting resin from the viewpoints of moldability and mechanical properties. As the thermosetting resins, for example, at least one selected from the group consisting of epoxy, phenol, vinylester, unsaturated polyester, cyanate ester, bismaleimide, benzooxadine and acrylic is preferred. Further, a resin added with an elastomer, a rubber, a curing agent, a curing acceleration agent, a catalyst, etc. can also be used.

The method for producing a reinforcing fiber substrate according to the present invention is a method for producing a reinforcing fiber substrate formed by at least reinforcing fiber yarns arranged in parallel to each other in one direction and including a resin material, whose main constituent is a thermoplastic resin, provided at 2 to 15 % by weight at least on one surface of the reinforcing fiber substrate, and the method comprises the following steps (A) to (E).

(A) Drawing step:

First, the reinforcing fiber yarns are drawn, for example, by drawing the reinforcing fiber yarns directly from bobbins set on a creel stand, or by drawing them from a beam prepared by sectional warping.

(B) Substrate forming step:

The reinforcing fiber yarns are arranged in parallel to each other in one direction to form a formation of a substrate. A resin material, whose main constituent is a thermoplastic resin, may be adhered onto at least on one surface of the substrate at 2 to 15 % by weight in this step, or it may be adhered simultaneously with or after a pressing step described later. In consideration of the efficiency of the pressing step, it is preferred to adhere the resin material simultaneously with the pressing step.

As the substrate formation formed in this step, a woven fabric, a knit fabric, a stitched substrate, a nonwoven fabric, and a combination thereof may be employed. Among these, a unidirectional woven fabric formed by using at least reinforcing fiber yarns as warps and using auxiliary yarns as wefts, or a unidirectional sheet formed with a nonwoven structure by auxiliary yarns, are preferred because they are excellent in straightness of reinforcing fiber yarns, production stability of substrate and dimensional stability of substrate. More preferably, a unidirectional woven fabric excellent in impregnation property of matrix resin is employed.

(C) Pressing step:

The reinforcing fiber substrate is pressed so that the thickness of the substrate becomes a thickness corresponding to a condition that the reinforcing fiber volume fraction $V_{pf}$ of the substrate is in a range of 40 to 60 %, preferably in a range of 43 to 58 %, more preferably in a range of 52 to 56 %. As described above, by controlling the reinforcing fiber volume fraction $V_{pf}$ in such a range of 40 to 60 %, it becomes possible to control the reinforcing fiber volume fraction $V_f$ and the dimension of a composite material to be obtained in desirable ranges strictly, and to exhibit high mechanical properties. If the reinforcing fiber volume fraction $V_{pf}$ of the reinforcing fiber substrate formed at the above-described substrate forming step is less than 40 %, an effect in this pressing step can be exhibited as much as possible.

As the pressing method, a method for continuously applying a pressure via a roller or a method for discontinuously applying a pressure via a plate can be raised. In a case where the substrate is pressed after or while a resin material is adhered, it is preferred to apply a pressure while heating the substrate at a temperature in a range of 40 to 370˚C because the substrate can be easily controlled in above-described range of $V_{pf}$. On the other hand, in a case where the substrate is pressed before a resin material is adhered, it is not always necessary to heat, and even by applying a pressure to the substrate at a room temperature, the substrate can be easily controlled in above-described range of $V_{pf}$.

(D) Cooling step:

This step is a step for cooling the substrate and fixing the resin material, and although it is possible to omit this step or naturally cool the substrate, it is preferable to carry out this step in order to form a desirable composite material quickly.

(E) Winding step:

In this step, the reinforcing fiber substrate is wound. Such a substrate is preferably a reinforcing fiber substrate having a resin material, whose main constituent is a thermoplastic resin, at 2 to 15 % by weight. As described above, by such a resin material, excellent formation stability and handling property of the substrate, an effect for reinforcing a portion between layers in a composite material and an effect for forming resin paths between layers at the time of molding a composite material can be obtained.

In the method for producing a reinforcing fiber substrate according to the present invention, the following steps (B1) and (B2) may be provided between (B) substrate forming step and (C) pressing step.

(B1) Temporary winding step for winding a substrate.
(B2) Temporary drawing step for drawing a substrate.

When the process is thus formed as an off-line process, because a difference between the processing speeds of (B) substrate forming step and (C) pressing step is not necessary to be adjusted, the respective steps are increased in freedom and the productivity can be increased.

In the method for producing a composite material according to the present invention, the reinforcing fiber substrate produced by the above-described method is molded, for example, by a molding method selected from various molding methods such as an injection molding (RTM (Resin Transfer Molding), RFI (Resin Film Infusion), RIM (Resin Injection Molding), vacuum assisted RTM, etc.) and a press molding, or a molding method combining any of them, so that the reinforcing fiber volume fraction $V_f$ calculated from the thickness of the composite material is in a range of 50 to 65 %.

As a more preferable molding method, an injection molding high in productivity can be raised. As such an injection molding, preferably RTM can be raised. In RTM, there is a molding method for injecting a matrix resin by pressurizing it into a cavity formed by a male mold and a female mold. As a more preferable molding method, a vacuum assisted RTM can be raised. In the vacuum assisted RTM, as described above, for example, a cavity, which is formed by any one of a male mold and a female mold and a bag material (for example, a flexible material such as a nylon film or a silicone rubber), is reduced in pressure, and a matrix resin is injected into the cavity by a pressure difference with an atmospheric pressure. In this case, it is preferred to place a resin distribution medium on the reinforcing fiber substrate in the cavity and to accelerate the distribution and impregnation of the matrix resin by the medium. After molding, it is preferred to remove the medium from the composite material. Such injection molding methods are preferably applied from the viewpoint of molding cost.

Further, it is preferred to mold a composite material so that the maximum cross-sectional waviness of a substrate layer in a section of the composite material is 0.3 mm or less, because particularly the compressive strength can be increased, as aforementioned.

Further embodiments of a reinforcing fiber substrate according to the first aspect and a composite made therefrom in the present invention will be explained. The reinforcing fiber substrate according to the present invention is a reinforcing fiber substrate including a reinforcing fiber yarn group arranged with reinforcing fiber yarns in parallel to each other in one direction and a weft-direction auxiliary yarn group formed by auxiliary yarns extending in a direction across the reinforcing fiber yarns and having a yield (Ta1) of 1 % or less of the yield (Tc) of the reinforcing fiber yarn, and a resin material is provided within a range of 0.5 to 20 % by weight at least on a surface of the reinforcing fiber substrate.

The unidirectional reinforcing fiber substrate according to the present invention is formed from at least the reinforcing fiber yarn group, the auxiliary yarn group and the resin material, and in the substrate, it is a minimum purpose to support the reinforcing fiber yarns by the auxiliary yarns and/or the resin material. Namely, it is possible to handle it as a unidirectional reinforcing fiber substrate.

The reinforcing fiber yarns are arranged in parallel to each other and in one direction. Also, the auxiliary yarns are arranged in a direction perpendicular to the reinforcing fiber yarns, or in a direction obliquely across the reinforcing fiber yarns. In order to provide an excellent formation stability to the unidirectional reinforcing fiber substrate, it is necessary that the continuous auxiliary yarns cross the reinforcing fiber yarns and support the reinforcing fiber yarns in a direction except the arrangement direction of the reinforcing fiber yarns.

The style of the unidirectional reinforcing fiber substrate can be an arbitrary texture style as long as the subject of the present invention can be solved. For example, it may be a weave structure or nonwoven structure wherein the auxiliary yarns are arranged in parallel to each other in one direction, or may be a knit structure wherein the auxiliary yarns are arranged at a warp knitting style (for example, 1/1 tricot knitting structure, etc.) or at a weft knitting style, or may be a combination thereof. Among these, a unidirectional woven fabric is preferred. In such a unidirectional woven fabric, not only the easiness of production and the formation stability of the unidirectional woven fabric can be exhibited as much as possible, but also the impregnation property of matrix resin and the straightness of the reinforcing fiber yarns are excellent.

Hereinafter, the present invention will be explained more concretely referring to the drawings.

Fig. 2 is a schematic plan view of a unidirectional reinforcing fiber substrate according to an embodiment of the present invention. In Fig. 2, a unidirectional reinforcing fiber substrate 11 comprises a fabric 15, and a resin material 14 adhered to the fabric 15. Fabric 15 is formed from reinforcing fiber yarns 12 and auxiliary yarns 13, and the reinforcing fiber yarns 12 and auxiliary yarns 13 form the fabric 15 at a structure of a nonwoven style. This fabric 15 is a kind of a unidirectional nonwoven fabric because the reinforcing fiber yarns 12 form a main body. The resin material 14 adheres to the surface of fabric 15 at a state being dispersed at a studded condition, and it fixes the auxiliary yarns 13 to the fabric 15. Further, although not depicted, the resin material 14 also adheres to the back surface of fabric 15 at a studded condition, and it fixes the auxiliary yarns 13 to the fabric 15 similarly.

Fig. 3 is a schematic vertical sectional view of a unidirectional reinforcing fiber substrate according to another embodiment of the present invention. In Fig. 3, a unidirectional reinforcing fiber substrate 21 comprises a fabric 25, and a resin material 24 adhered to the surface of the fabric 25. Fabric 25 is formed from warps of reinforcing fiber yarns 22 and 26 and wefts of auxiliary yarns 23 and 27. Although not depicted, the reinforcing fiber yarns 22 and 26 and the auxiliary yarns 23 and 27 intersect to each other to form the fabric 25 at a plain weave structure. Such a fabric 25 is a kind of a unidirectional woven fabric because the reinforcing fiber yarns 22 and 26 form a main body. The resin material 14 adheres to the upper surface of fabric 25, and it fixes the auxiliary yarns 23 to the fabric 25 at the upper surface thereof.

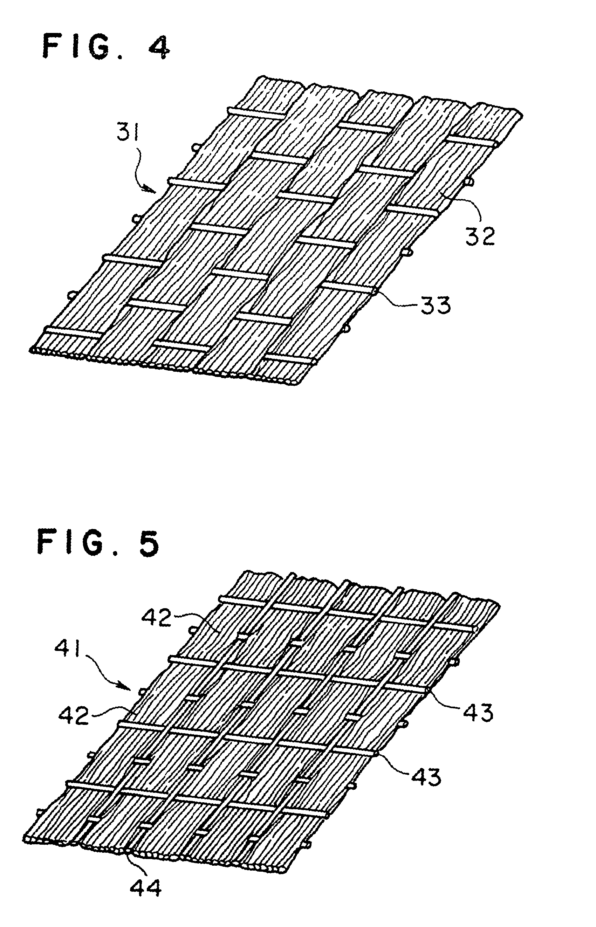

Fig. 4 is a perspective view of an example of a fabric used for a unidirectional reinforcing fiber substrate according to the present invention. In Fig. 4, the unidirectional woven fabric as a fabric 31 is formed by intersecting reinforcing fiber yarns 32 of warps arranged in parallel to each other in one direction and auxiliary yarns 33 of wefts perpendicularly across the reinforcing fiber yarns 32 to each other to form the fabric 31 at a plain weave structure. Although the weave structure shown in Fig. 4 is a plain weave, an arbitrary weave structure such as a satin weave and a twill weave can be employed.

In the present invention, the yield of the weft-direction auxiliary yarns (Ta1) is I % or less of the yield of the reinforcing fiber yarns (Tc), i.e., (Ta1 x 100)/Tc $\leqq$ 1. More preferably it is 0.7 % or less, and further more preferably it is 0.5 % or less. Although such a ratio does not particularly have a lower limit, it is generally 0.01 % or more from the viewpoint of formation stability or stable production of the fabric. This relationship between Ta1 and Tc is similar to that in the aforementioned reinforcing fiber substrate according to the first aspect of the present invention.

Although the yield of the weft-direction auxiliary yarns is hard to become an appropriate index solely, when a carbon fiber yarn with a yield in a range of 800 to 1,700 tex is considered as the reinforcing fiber yarn, the yield of the auxiliary yarns (Ta1) is 8 tex or less from the viewpoint of reducing of affection to crimps, more preferably 5 tex or less, further more preferably 2 tex or less.

The weft-direction auxiliary yarns are preferably multifilament yarns from the viewpoint of suppressing crimps. Preferably, the number of filaments is more than 5. If such a multifilament yarn is employed, it becomes possible to further reduce the yield (diameter) of a single filament and to improve the straightness of the reinforcing fiber yarns by further reducing crimps. Such a condition is preferred also from the viewpoints of reduction of the frequency of yarn breakage of the weft-direction auxiliary yarns, the handling property and the production stability of the unidirectional reinforcing fiber fabric. Here, in a case of multifilament yarns, it is preferred to use non-twist yarns in order to achieve high mechanical properties and high reinforcing fiber volume fraction of a composite material to be molded.

Also, it is preferred that the sectional formation of the weft-direction auxiliary yarn is flat or tape-like as much as possible. Concretely, the ratio (w/t) of the width of the yarn (w) to the thickness of the yarn (t) is preferably 2 or more, more preferably 4 or more. For example, when a sectional shape of a yarn becomes circular or round by twisting, covering by yarns, gathering a plurality of yarns, applying a binder, etc., there may be a case where crimps become great. In a case of multifilament yarn, it is preferred that respective single multifilament yarns are not overlapped but are arranged in parallel to each other in a plain plate style.

It is preferred that the weft-direction auxiliary yarns are not applied with a treatment or a process which cause the yarns to be thicker (the section form to be greater). For example, when twisting, covering by yarns, gathering a plurality of yarns, applying a binder or an adhesive, etc. is carried out, there is a case where the yarn becomes thicker. Also, in a case where the weft-direction auxiliary yarn is secondarily processed by woolie finish, crimping finish, entanglement treatment, etc., there is a case where the yarn becomes thicker. A preferable thickness of an auxiliary yarn is 100$\mu$m or less, more preferably 50 $\mu$m or less, particularly preferably 30 $\mu$m or less. Such a thickness corresponds to a value calculated from a difference between the thicknesses of a portion where the weft-direction auxiliary yarn exist and a portion where the weft-direction auxiliary yarn does not exist, determined in the measurement of the thickness of a unidirectional reinforcing fiber fabric based on JIS-R7602.

Although the formation stability of a unidirectional reinforcing fiber fabric becomes fairly poor if the weft-direction auxiliary yarns are not applied with an adhesive treatment, in the present invention, because the resin material adheres, a function for providing the formation stability can be ensured even in such a case.

In the unidirectional reinforcing fiber fabric according to the present invention, the resin material is provided at least on the surface of the unidirectional reinforcing fiber fabric at an amount in a range of 0.5 to 20 % by weight, preferably in a range of 2 to 17 % by weight, more preferably in a range of 4 to 14 % by weight.

By the resin material adhering in the above-described range, deformation of the reinforcing fiber yarns and the weft-direction auxiliary yarns can be prevented and the formation stability of the substrate can be given. Further, when the unidirectional reinforcing fiber substrates are laminated, the tack property (adhesive property) therebetween is given. As a result, it becomes possible to obtain a unidirectional reinforcing fiber substrate having an excellent handling property. Such an excellent handling property is not exhibited at an amount of the resin material less than 0.5 % by weight.

Furthermore, the resin material adhering to at least one surface of the substrate functions as a crack stopper in a composite material which is obtained by laminating the unidirectional reinforcing fiber fabrics (unidirectional reinforcing fiber substrates). In particular, when the composite material is applied with an impact, the resin material functions to suppress damage, and it gives excellent mechanical properties (particularly, a compressive strength after impact) to the composite material (an effect for interlamina toughening). Even if the resin material adheres to a portion other than the surface, it functions to release an interior residual stress in the composite material, and contributes to increase the mechanical properties. In addition to such an effect for increasing the appropriate stiffness, when the unidirectional reinforcing fiber fabrics are laminated, the resin material adhering to the surface becomes a spacer, and a space is formed between layers of the unidirectional reinforcing fiber fabrics adjacent to each other in the thickness direction. When a composite material is molded by injection molding described later, such a space functions as a flow path of a matrix resin (an effect for forming a flow path at a portion between layers). By this effect, not only the impregnation of the matrix resin is facilitated but also the impregnation speed becomes high, and an excellent productivity of a composite material can be provided.

If the amount of the resin material is more than 20 % by weight, not only the reinforcing fiber volume fraction when manufactured to a composite material may become too low, but also there may be a case poor in mechanical properties. Also when the unidirectional reinforcing fiber fabrics are bonded to each other by heating, there may be a case obstructing the resin impregnation by a condition where the resin material deforms and breaks the resin flow path, and such a condition is not preferable.

Although such a resin material adheres to at least the surface of the unidirectional reinforcing fiber fabric, except the surface, it may adhere to the interior of the unidirectional reinforcing fiber fabric, that is, inside of the reinforcing fiber yarns (between reinforcing fiber filaments). However, because the above-described effect for reinforcing a portion between layers and effect for forming a flow path at a portion between layers remarkably are exhibited particularly by adhesion of the resin material on the surface, it is preferred that the resin material exists substantially only on the surface of the unidirectional reinforcing fiber fabric. By such an existence only on the surface, the adhesion amount of the resin material can be minimized, and the volume of resin, when the composite material is molded, can be reduced, namely, the reinforcing fiber volume fraction can be further increased, and the lightening effect of the composite material can be exhibited more greatly.

Such a resin material may be adhered either on one surface or both surfaces of the fabric. The former style is preferable for producing the unidirectional reinforcing fiber substrate more inexpensively. In a case where the unidirectional reinforcing fiber substrate is intended to be used without discriminating the surface and the back surface of the substrate, the latter style is preferable, and both styles can be selected depending upon the usage.

Here, the resin material has a form of, a powder-like material of a synthetic resin, and it does not cover the entire surface of the fabric. In particular, a studded formation is preferred from the viewpoints that the impregnation property of a matrix resin into the unidirectional reinforcing fiber substrate (particularly, impregnation in a direction perpendicular to the lamination surface) is excellent, that the reinforcing fiber volume fraction of a composite material to be molded can be increased, and that the dispersion of the moisture component of the resin material can be minimized. The discontinuous existence of the resin material means a formation wherein, when the surface of the unidirectional reinforcing fiber substrate is referred to as a sea and the resin material is referred to as an island, many islands are dispersed in the sea. The maximum width of an island is smaller than the entire width of the fabric. A part of these islands may form a lake therein.

In the resin material having such a studded formation, it is preferred that a mean diameter of the dots (a mean short diameter in a case of an oval) is I mm or less, more preferably 250 $\mu$m or less, further more preferably 50 $\mu$m or less, because the resin material can be distributed uniformly of the surface of the substrate as the mean diameter becomes smaller.

In a case where a plurality of unidirectional reinforcing fiber substrates are laminated, if the concave/convex of the resin material adhered to the surface of the substrate in a direction perpendicular to the surface of the substrate is too great, a unidirectional reinforcing fiber fabric or reinforcing fiber yarns adjacent thereto may be waved. In this case, the mechanical properties of a composite material molded (particularly, open-hole compressive strength, 0° compressive strength, etc.) deteriorate. From such a viewpoint, a mean thickness of the resin material studded on the surface of the fabric is preferably in a range of 5 to 250 $\mu$m, more preferably in a range of 10 to 100 $\mu$m, and further more preferably in a range of 15 to 60 $\mu$m.

In the unidirectional reinforcing fiber substrate according to the present invention, it is preferred that warp-direction auxiliary yarns are further arranged without crossing the reinforcing fiber yarns, preferably arranged in a direction parallel to the reinforcing fiber yarns, and they form a warp-direction auxiliary yarn group. The yield of such warp-direction auxiliary yarns (Ta2) is preferably 20 % or less of the yield of the reinforcing fiber yarns (Tc), i.e., (Ta2 x 100)/Tc $\leqq$ 20. More preferably it is 12 % or less, and further more preferably it is 5 % or less. Although such a ratio does not particularly have a lower limit, it is generally 0.01 % or more from the viewpoint of formation stability and production stability of the fabric.

Since the warp-direction auxiliary yarns are arranged in parallel to the reinforcing fiber yarns and do not cross them, intersections with the reinforcing fiber yarns are not formed. Namely, the warp-direction auxiliary yarns do not crimp the reinforcing fiber yarns. From this, there is no problem even if Ta2 has a high value of the above-described ratio and is higher than Ta1 in yield. If Ta2 is more than 20 % of Tc, the weight of a composite material to be molded becomes great, and because the weight saving effect that is an essential purpose of a composite material is injured, such a condition is not preferred.

However, it is not always true that the warp-direction auxiliary yarns do not influence the mechanical properties of a composite to be molded at all. As to tensile properties of a composite material, because a strength is burdened to the reinforcing fibers, a high strength is not required for the warp-direction auxiliary fibers. On the other hand, as to an elongation at failure, in a case where that of the warp-direction auxiliary fibers is smaller than that of the reinforcing fibers, there may be a case where the warp-direction auxiliary fibers are fractured or broken prior to the reinforcing fibers and fine cracks occur in the composite material. It is preferred that the warp-direction auxiliary yarn has an elongation at failure higher than that of the reinforcing fiber yarn.

A first meaning in use of such warp-direction auxiliary yarns is to accelerate the impregnation of a matrix resin at the time of molding a composite material by ensuring gaps between reinforcing fiber yarns adjacent to each other or by enlarging the gaps, namely, to form a flow path of a matrix resin in a layer (an effect for forming a flow path in a layer). This effect can be sufficiently exhibited by arranging the warp-direction auxiliary yarns without crossing the reinforcing fiber yarns and using the warp-direction auxiliary yarns having a yield larger than that of the other auxiliary yarns. On the other hand, the weft-direction auxiliary yarns arranged crossing the reinforcing fiber yarns are small in such an effect, because large-yield yarns cannot be applied to them on account of suppressing crimps of the reinforcing fiber yarns.

From such a viewpoint, it is preferred that a mean gap between adjacent reinforcing fiber yarns is in a range of 0.1 to 1 mm in the entire width of the unidirectional reinforcing fiber substrate, more preferably in a range of 0.2 to 0.8 mm, further more preferably in a range of 0.3 to 0.5 mm. If within such a range, the above-described effect for forming a flow path in a layer can be sufficiently exhibited. If below the range, there is a case where such an effect is not exhibited sufficiently. On the contrary, if the gaps are too wide, when a composite material is molded, large resin-rich portions are formed, and there may be a case where the reinforcing fiber volume fraction is reduced, the mechanical properties (particularly, a fatigue strength) are reduced, and thermal cracks are generated. In the determination of the gaps of the reinforcing fiber yarns, even if the warp-direction auxiliary yarns exist between the reinforcing fiber yarns, the gaps are measured by neglecting the warp-direction auxiliary yarns.

In order to efficiently form a flow path of a matrix resin, it is preferred to prevent breakage of such a flow path caused by widening of the warp-direction auxiliary yarns too much. From such a viewpoint, it is preferred that a sizing (collecting) treatment is performed on the warp-direction auxiliary yarns. As such a sizing treatment, for example, twisting of the warp-direction auxiliary yarns, covering by yarns, gathering a plurality of yarns, applying a binder, etc. can be raised. Among these treatments, covering by yarns and applying a binder are preferred because a great effect can be obtained at an inexpensive treatment cost. As yarns used for covering, for example, auxiliary yarns and the like can be used. Further, as a method for applying a binder, an arbitrary method can be employed, for example, a method for applying a thermosetting resin or a thermoplastic resin in the form of an emulsion or a dispersion, or directly applying them by a hot-melt process.

In order to efficiently form a flow path of a matrix resin, the warp-direction auxiliary yarns may be yarns whose fiber raw materials are served to a secondary processing such as woolie finish, crimping finish, entanglement treatment, etc. By such a processing, the bulk of the yarn can be increased and the flow path of a matrix resin can be positively formed.

A second effect of use of the warp-direction auxiliary yarns is to flatten the concave/convex of the fabric. In the unidirectional reinforcing fiber fabric, concave/convex is formed by the reinforcing fiber yarns and the gaps thereof. If the warp-direction auxiliary yarns exist between adjacent reinforcing fiber yarns, the concave/convex can be flattened by giving a thickness to the gaps between the reinforcing fiber yarns. By using the warp-direction auxiliary yarns, the cross section of the reinforcing fiber yarn can be turned from an oval-like shape to a rectangular-like shape, and a further flattening can be achieved (a flattening effect). By such an effect, in a case where a composite material is obtained by laminating unidirectional reinforcing fiber substrates, waviness of laminated layers can be suppressed, and higher mechanical properties can be exhibited

A third effect of use of the warp-direction auxiliary yarns is to further improve the straightness of the reinforcing fiber yarns. If the warp-direction auxiliary yarns exist between adjacent reinforcing fiber yarns, the warp-direction auxiliary yarns function like a guide in the direction (a guide effect). Although the reinforcing fiber yarns are likely to be disordered particularly in straightness at intersections with auxiliary yarns, even in such positions, the straightness can be maintained. By an extremely high straightness due to such an effect, a composite material extremely excellent in mechanical properties required for, for example, primary structural elements of aircraft can be obtained.

As a style of a unidirectional reinforcing fiber fabric using such warp-direction auxiliary yarns, except the above-described structures, for example, a woven structure or non-woven structure may be employed wherein the warp-direction auxiliary yarns are arranged in parallel to each other in the same direction of the reinforcing fiber yarns, a knit structure may be employed wherein the warp-direction auxiliary yarns are arranged at a warp knitting style (for example, a chain knitting structure, a composite knitting structure such as a hollow style knitting combining a chain knitting structure and 1/1 tricot knitting structure), and a combination thereof may be employed (for example, a nonwoven structure of reinforcing fiber yarns and auxiliary yarns arranged in parallel to each other is knitted at a warp knitting style of the warp-direction auxiliary yarns). Among these, a unidirectional woven fabric (a unidirectional non-crimp woven fabric) is preferred. In such a unidirectional non-crimp woven fabric, the weft-direction auxiliary yarn groups crossing the reinforcing fiber yarn group are disposed on both surfaces of a sheet of the reinforcing fiber yarn group in which the reinforcing fiber yarns are arranged in a form of a sheet in parallel to each other in one direction, and these auxiliary yarn groups and the warp-direction auxiliary yarn group extending in parallel to the reinforcing fiber yarns form a weave structure to hold the yarn groups integrally. In such a unidirectional non-crimp woven fabric, because not only the handling property of a unidirectional reinforcing fiber fabric but also the straightness of the reinforcing fiber yarns and the impregnation property for a matrix resin exhibit further greatly as compared with the above-described unidirectional woven fabric, it is considered to be an optimum formation as a substrate according to the present invention.

Fig. 5 is a perspective view of another example of a fabric used for a unidirectional reinforcing fiber substrate according to the present invention. In Fig. 5, the unidirectional woven fabric as a fabric 41 is formed by intersecting warps of warp-direction auxiliary yarns 44 arranged in parallel to each other in one direction and wefts of weft-direction auxiliary yarns 43 perpendicularly across the warp-direction auxiliary yarns 44 to each other to form a plain weave structure, thereby supporting the reinforcing fiber yarns 42 arranged in one direction to form the fabric 41. Although the weave structure formed by the warp-direction auxiliary yarns 44 and the weft-direction auxiliary yarns 43 is a plain weave in Fig. 5, it is not limited thereto, a weave structure such as a satin weave and a twill weave can be employed.

In the unidirectional reinforcing fiber substrate according to the present invention, it is preferred that the areal weight of reinforcing fibers (Wc) is in a range 100 to 400 g/m$^2$, more preferably in a range 130 to 290 g/m$^2$, further more preferably in a range 140 to 220 g/m$^2$, and the areal weight of auxiliary fibers (Wa1) is 0.7 % or less of the areal weight of reinforcing fibers (Wc), more preferably 0.5 % or less, further more preferably 0.4 % or less.

If Wa1 is more than 0.7 % of Wc, it means that the intersections of the reinforcing fiber yarns and the auxiliary yarns increase, and even if the cripms are small, it is disadvantageous from the viewpoint of mechanical properties. Further, by a condition where the amount of auxiliary yarns relatively increases, there is a case where reduction of a compressive strength after hot/wet conditioning or a compressive strength in a high-temperature condition may happen. Such a ratio does not particularly have a lower limit, and although it is better as the ratio becomes smaller, it is generally 0.01 % or more from the viewpoints of formation stability and production stability of the fabric.

With respect to the warp-direction auxiliary yarns, it is preferred that the areal weight of the warp-direction auxiliary fibers (Wa2) is 25 % or less of the areal weight of reinforcing fibers (Wc), more preferably 12 % or less, further more preferably 5 % or less. Although such a ratio does not particularly have a lower limit, it is generally 0.1 % or more from the viewpoints of formation stability and production stability of the substrate.

Since the warp-direction auxiliary yarns do not cross the reinforcing fiber yarns, intersections with the reinforcing fiber yarns are not formed. Further, by setting the areal weight thereof at a high value, the range for selection of the warp-direction auxiliary yarns can be enlarged, and yarns excellent in thermal resistance, resistance against moisture absorption, etc. are easily applied. Therefore, even if Wa2 is more than Wa1, influence to mechanical properties can be minimized. From these, there is no problem even if Wa2 is a high areal weight having a high value of the above-described ratio as compared with Wa1. However, if Wa2 is more than 25 % of Wc, the weight of a composite material to be molded becomes great, and because the weight saving effect that is an essential purpose of a composite material is injured, such a condition is not preferred.

From another viewpoint, it is preferred that the value of the weft-direction auxiliary yarn ends is in a range of 0.3 to 6 ends/cm or wale/cm, more preferably in a range of I to 4 ends/cm or wale/cm, in order to stabilize the formation of the unidirectional reinforcing fiber substrate and minimize the influence due to the intersections with reinforcing fiber yarns 32 or 42.

Similarly, it is preferred that the value of the warp-direction auxiliary yarn 44 (Fig. 5) ends is in a range of 0.1 to 6 ends/cm or wale/cm, more preferably in a range of 1 to 3 ends/cm or wale/cm, from the viewpoints of formation stability of fabric 41 and impregnation property due to the effect for forming a flow path in a layer.

In particular, in a case where the areal weight of reinforcing fibers (Wc) is small to be 220 $g/m^2$ or less, the concave/convex of the reinforcing fiber yarns is likely to appear. If such a unidirectional reinforcing fiber substrate is molded to a composite material, there may be a case where the laminated layers are waved. Therefore, it is preferred that the reinforcing fiber yarns are served to an opening treatment before formation of the substrate or/and after formation of the substrate. As such an opening treatment, for example, oscillation of a roller or an indentator in the longitudinal direction and/or the transverse direction of the fabric, air jet injection, etc. can be raised, and other arbitrary methods can be employed.

Hereinafter, the auxiliary yarns forming the weft-direction auxiliary yarn group, the auxiliary yarns forming the warp-direction auxiliary yarn group, the reinforcing fiber yarns and the resin material will be explained in more detail.

In order to highly exhibit a property after hot/wet conditioning and a high-temperature property among mechanical properties, it is necessary that the weft-direction auxiliary yarns and the warp-direction auxiliary yarns are excellent in thermal resistance. On the other hand, to be too excellent in thermal resistance causes the cost for manufacturing yarns to increase. From such a viewpoint, it is preferred that the melting point of the weft-direction auxiliary yarns is in a range of 210 to 350˚C, more preferably in a range of 240 to 300˚C. As to a material which does not indicate a melting point, the glass transition temperature thereof is preferably in a range of 160 to 300˚C. Such melting point and glass transition temperature indicate a temperature for melting a crystal and a temperature for transforming to a glass condition, determined by differential scanning calorimetry (DSC).

In order to increase the mechanical properties of a composite material to be obtained, the adhesive property between the weft-direction auxiliary yarns and a matrix resin is extremely important, and the higher the adhesive strength is, the higher the mechanical properties can be exhibited unexpectedly.

As indexes directly concerning such an adhesive property, in a composite material obtained by the molding methods described in the examples of the present invention, the reinforcing fiber volume fraction $V_f$ is in a range of 53 to 65 %, and the following factors can be raised. In the unidirectional reinforcing fiber fabric according to the present invention, it is preferred to satisfy the following factors (a), (c) and/or (d). In such a case, the adhesive property with a matrix resin is considered to be excellent. More preferably, the factors (a), (c) and (d) are all satisfied. Where, the SACMA standards are as aforementioned.

Factor (a): a compressive strength at a room temperature after impact at an impact energy of 6.67 J/mm (CAI) is 240 MPa or more.

Factor (c): a 0˚ compressive strength at a room temperature (CS/RT) is 1,350 MPa or more, and a 0˚ compressive strength at a high temperature after a hot/wet conditioning (CS/HW) is 1,100 MPa or more.

Factor (d): an open-hole compressive strength at a room temperature (OHC/RT) is 275 MPa or more, and an open-hole compressive strength at a high temperature after a hot/wet conditioning (OHC/HW) 21 5 MPa or more.

In a case where a composite material excellent in the above-described CAI, OHC or CS is obtained, generally an epoxy is frequently used as a matrix resin. For example, in a case where an epoxy is a matrix resin, it is preferred to use auxiliary yarns excellent in adhesive property with the epoxy other than excellent in thermal resistance and resistance against moisture absorption of the auxiliary fibers. Concretely, it is preferred to contain as a main constituent at least one selected from the group consisting polyamide, polyphenylenesulfide, polyetherimide, polyethersulfone, polyketone, polyetheretherketone and phenol.

Among these, polyamide is preferred as the main constituent. For example, a homopolyamide composed of at least one kind of component selected from the group consisting of polyamide 46, polyamide 6, polyamide 66, polyamide 9, polyamide 11, polyamide 12, polyamide 610, polyamide 612, etc. or a copolymerized polyamide, can be used. Except the above-described components, a polyamide copolymerized with at least one component selected from the group consisting of aromatic dicarboxylic acid or diamine such as isophthalic acid, terephthalic acid, paraxylene diamine and methaxylene diamine, and alicyclic dicarboxylic acid or diamine such as dimethyl bis(p-aminocycrohexyl) methane, can be used. In particular, polyamide 66 is most preferable from the balance of adhesive property, thermal resistance and resistance against moisture absorption.

In a case where an epoxy is used as a matrix resin, because generally a material such as polyolefin or polyester having a low polarity is poor in adhesive property, a composite material having extremely high mechanical properties cannot be obtained simply by auxiliary yarns having these components. However, if such auxiliary yarns of a low polarity are, for example, provided with a functional group on the fiber surfaces and the fiber surfaces are treated with a treatment for turning the fiber surfaces into a high polarity such as a plasma treatment or a treatment for providing a coupling agent, it becomes possible to improve the adhesive property, and there is a case capable of solving the subject of the present invention.

From the viewpoint of such an adhesive property with a matrix resin, there is a case where an oil content (a prossing oil, a finishing oil, etc.) used in the manufacturing process of auxiliary yarns gives a bad influence. Therefore, it is preferred to reduce the oil content as little as possible by reducing the amount of oil content in the manufacturing process, by thermal decomposition due to heating, or by removing the oil content after manufacturing by purification due to washing liquid, etc. Concretely, the oil content is preferably suppressed at 1 % or less-relative to the auxiliary yarns, more preferably at 0.6 % or less, further more preferably at 0.2 % or less. If such an oil content is more than 1 %, there may be a case where particularly the mechanical properties after hot/wet conditioning (especially, OHC/HW, CS/HW, etc.) become poor.

As to the warp-direction auxiliary yarns, because they are arranged without crossing the reinforcing fiber yarns, their shrinkage must be considered. For example, if the dry thermal shrinkage of the warp-direction auxiliary yarns is too great, when a unidirectional reinforcing fiber substrate is heated, the reinforcing fiber yarns are waved in an arch-like shape, and the straightness thereof may be deteriorated. From such a viewpoint, it is preferred that the dry thermal shrinkage at 180˚C of the warp-direction auxiliary yarns is I % or less, more preferably 0.2 % or less, and further more preferably, they do not thermally shrink.

As yarns satisfying such conditions, for example, at least one selected from the group consisting of carbon fiber, glass fiber, metal fiber, ceramic fiber, and organic fiber (for example, aramide fiber, polyparaphenylene bennzobis oxazol (PBO) fiber, phenol fiber, polyethylene (PE) fiber, polyvinylalcohol (PVA) fiber, etc.), can be preferably employed. Among these fibers, glass fiber with substantially no thermal shrinkage, excellent in line-up of yarn yield, resistance against moisture absorption and cost balance, is preferred. As described above, in order to improve the adhesive property with a matrix resin, glass fiber treated by a coupling treatment is further preferred.

Although the kind of the reinforcing fiber yarns used in the present invention are not particularly restricted, for example, glass fiber, organic fiber (aramide, PBO, PVA, PE, etc.) or carbon fiber can be raised. Since carbon fiber is excellent in specific strength and specific elastic modulus and excellent in resistance against moisture absorption, it is preferably used as the reinforcing fiber yarn used for structural elements of aircraft and vehicles.

In particular, if the reinforcing fiber yarns are formed from the following high-toughness carbon fibers, because the impact absorption energy of a composite to be molded becomes great, it becomes possible to use the composite material as a primary structural element of aircraft. Namely, the carbon fibers are preferred, which have a tensile elastic modulus (E) of 210 GPa or more, more preferably 280 GPa or more, and a strain energy at failure (W) of 40 MJ/m$^3$(= 40 x 10 J/m$^3$) or more, more preferably 53 MJ/m$^3$ or more, each determined based on JIS-R7601. Although the strain energy at failure (W) is better as it becomes higher as much as possible, it is generally 80 MJ/m$^3$or less in a case of carbon fibers usually available to be obtained from the market. In the carbon fibers having a tensile elastic modulus of 280 GPa or more and a strain energy at failure of 53 MJ/m$^3$ or more, the mean diameter of the single filamentary yarn is preferably less than 7 $\mu$m. If less than 7 $\mu$m, there is an advantage that the carbon fibers having the above-described properties are easily obtained. If carbon fibers having a tensile elastic modulus (E) less than 210 GPa are used, it is necessary to increase the plate thickness when a composite material is used as a structural element in order to set a waviness of the composite material as the structural element within an allowable range, and as a result, the composite material becomes heavy. Further, if the strain energy at failure (W) is less than 40 MJ/m$^3$ when an impact is applied to a composite material, because an impact energy absorbed by the breakage of the carbon fibers is small, the remaining energy is consumed to break a matrix resin layer between layers, cracks between layers become great, and such a condition is not preferred. Further, the reliability of the composite material becomes poor. The strain energy at failure (W) is calculated from the tensile strength ($\sigma$, unit: MPa) and the tensile elastic modulus (E, unit: MPa) determined based on the method defined in JIS-R7601, by the equation: W = $\sigma$r/2 x E. Unit is MJ/m$^3$.

When carbon fibers are used as the reinforcing fiber yarns, it is preferred that the number of filaments is in a range of 6,000 to 70,000, more preferably in a range of 12,000 to 25,000, and the yield (Tc) of the yarn is in a range of 400 to 5,000 tex, more preferably in a range of 800 to 1,800 tex. In such a range, there is an advantage that the high-performance carbon fibers can be obtained relatively inexpensively. Further, preferably the reinforcing fiber yarn in the present invention are substantially not twisted from the viewpoint of exhibition of high reinforcing fiber volume fraction and mechanical properties of a molded composite material.

Although the resin material used in the present invention is heat treated in order to exhibit a tack property when the unidirectional reinforcing fiber substrates are laminated, from the viewpoint of workability thereof, it is preferred that the resin material has a melting point or a glass transition temperature in a range of 50 to 150˚C, more preferably in a range of 70 to 140˚C, further more preferably in a range of 90 to 120˚C.

The constituent of the resin material is not particularly limited as long as it can increase the handling property of the unidirectional reinforcing fiber fabric and increase the mechanical properties of a composite material obtained by using the substrate. As the resin material, various kinds of thermosetting resins and/or thermoplastic resins can be used.

In a case where a thermoplastic resin is used as a main constituent, for example, it is preferred to use at least one selected from the group consisting of polyamide, polysulfone, polyethyersulfone, polyetherimide, polyphenyleneether, polyimide, polyamideimide, phenoxy and phenol. Among these, polyamide, polyetherimide, polyphenyleneether and polyethyersulfone are particularly preferred.

It is preferred that a thermoplastic resin is a main constituent of the resin material and the compound amount thereof is in a range of 60 to 100 % by weight, more preferably in a range of 70 to 100 % by weight, further more preferably in a range of 75 to 97 % by weight. If the compound amount is less than 60 % by weight, there may be a case where it is difficult to obtain a composite material excellent in mechanical properties (particularly, CAI). Further, when a thermoplastic resin is a main constituent, there may be a case where the adhesive property of the resin material to the fabric or the adhesive processing property becomes poor. In this case, it may be carried out to compound a small amount of a tackifier, a plasticizer, etc. to the resin material as a sub-component. As such a sub-component, it is preferred to employ a component used as a matrix resin described later. If such a sub-component is one similar to or resembling to a matrix resin, there is an advantage that the adhesive property and the compatibility with the matrix resin are excellent.

In a composite material according to the present invention, at least, a matrix resin is impregnated into the above-described unidirectional reinforcing fiber substrate. The matrix resin impregnated into the unidirectional reinforcing fiber substrate is solidified (cured or polymerized) after impregnation to form a composite material.

Although such a matrix resin is not particularly restricted as long as the subject of the present invention can be solved, it is preferably a thermosetting resin from the viewpoints of moldability and mechanical properties. As the thermosetting resin, for example, at least one selected from the group consisting of epoxy, phenol, vinylester, unsaturated polyester, cyanate ester, bismaleimide, benzooxadine and acrylic is preferred, because the subject of the present invention can be easily solved. Further, a resin added with an elastomer, a rubber, a curing agent, a curing acceleration agent, a catalyst, etc. can also be used. Particularly, in order to achieve extremely high mechanical properties (particularly, CAI, OHM, CS, etc.) required for, for example, structural elements of aircraft, epoxy or bismaleimide are preferred, and in particular, epoxy is preferred.

When the matrix resin is impregnated into the unidirectional reinforcing fiber substrate by an injection molding described later, if the viscosity of the matrix resin is low, the impregnation time can be shortened, and the impregnation becomes possible even in a case of unidirectional reinforcing fiber substrates laminated very thickly. Such a viscosity is preferably 400mPa s or less at a temperature of injection, more preferably 200mPa s or less. Further, in order to take a impregnation time as long as possible, the viscosity at the injection temperature after one hour is preferably 600mPa · s or less, more preferably 400mPa s or less. If the injection temperature is 100˚C or lower, because the device can be simplified, such a condition is preferred.

The composite material according to the present invention can be molded by various molding methods, for example, such as an injection molding (RTM (Resin Transfer Molding), RFI (Resin Film Infusion), RIM (Resin Injection Molding), vacuum assisted RTM, etc.) and a press molding, and a molding method combining any of them. As a more preferable method for molding a composite material, a vacuum assisted injection molding high in productivity can be raised. Molding methods similar to those employed in the aforementioned reinforcing fiber substrate according to the first aspect can be employed.

Although the use of the composite material according to the present invention is not particularly restricted, because the composite material has high mechanical properties such as extremely high CAI, OHC, CS, etc., particularly when it is used as primary structural elements, secondary structural elements, outside elements, interior elements or parts thereof of conveyors such as aircraft, vehicles or ships, the effect thereof can be exhibited as much as possible.

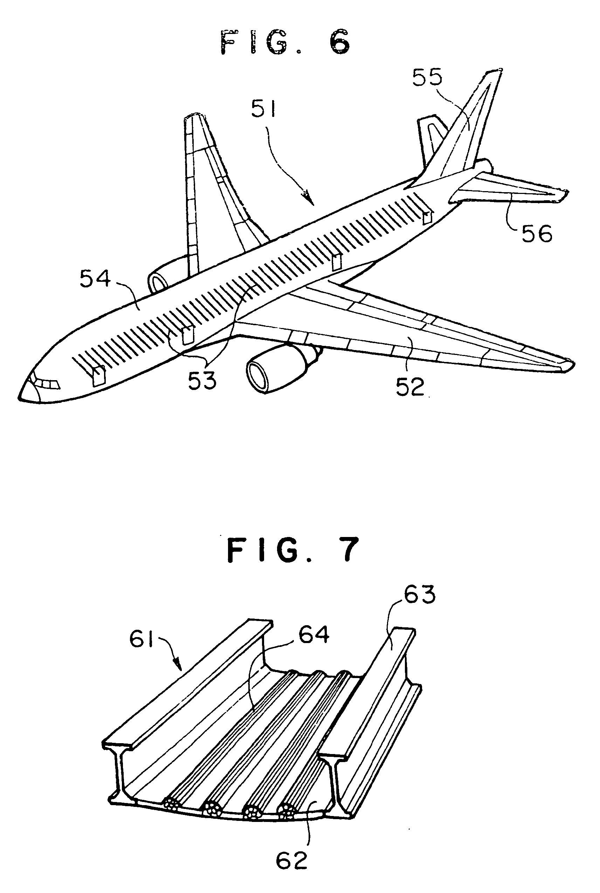

Fig. 6 is a schematic perspective view of primary structural elements of an airplane. In Fig. 6, an airplane 51 comprises various structural elements such as main wings 52, keel beams 53, a fuselage 54, a vertical fin 55, horizontal stabilizers 56, etc. When the composite material molded by impregnating a matrix resin into the unidirectional reinforcing fiber substrate according to the present invention is used for these structural elements, not only excellent mechanical properties can be exhibited, but also the structural elements can be produced at a high productivity.

Fig. 7 is a schematic perspective view of a structural element showing another example using the composite material according to the present invention. In Fig. 7, a structural element 61 comprises a skin 62, spars 63 and stiffeners 64. In the conventional technology, a skin material, beam materials and stiffeners are molded separately, and they are bonded by an adhesive to manufacture the structural element, but in the composite material according to the present invention, it becomes possible to mold the skin, spars and stiffeners integrally, and the molding cost of the structural element can be greatly reduced.

Next, the aforementioned reinforcing fiber substrate according to the third aspect and a composite made therefrom in the present invention will be explained referring to the drawings.

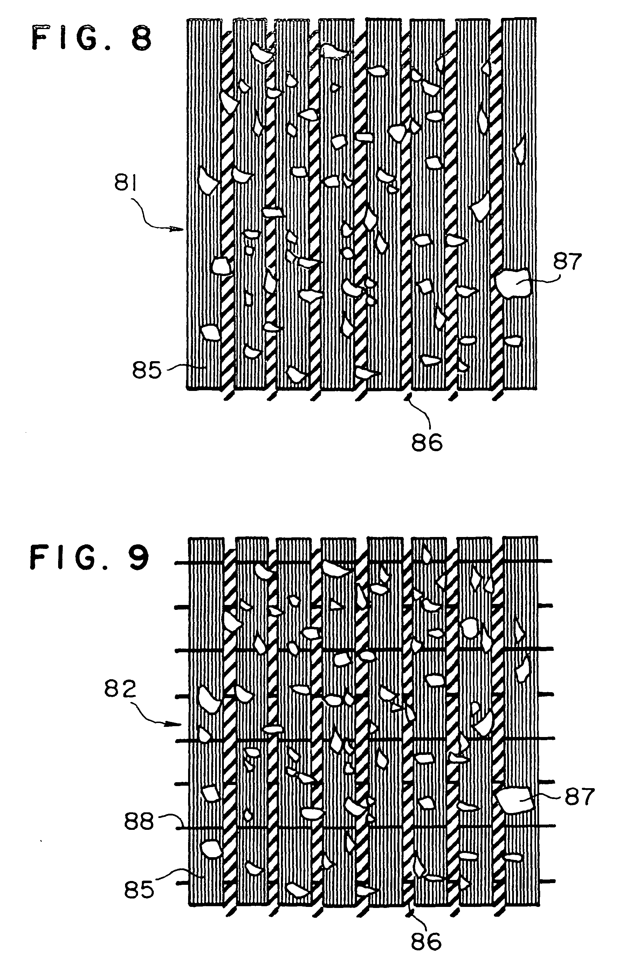

Fig. 8 is a plan view showing an example of a reinforcing fiber substrate according to an embodiment of the present invention. In Fig. 8, a unidirectional reinforcing fiber substrate 81 is formed so that reinforcing fiber yarns 85 are arranged in parallel to each other in the longitudinal direction, spacer yarns 86 whose surfaces have concave/covex forms are arranged between the reinforcing fiber yarns 85 to form a group arranged with reinforcing fiber yarns in parallel to each other in one direction, on the group of reinforcing fiber yarns a resin material 87 is adhered at a studded condition, and these are integrated.

As aforementioned, although in RTM method and VaRTM method it is usually considered to be ideal that a matrix resin is injected from a surface of a bag or an injection hole provided on a mold into a laminate made by laminating a plurality of layers of reinforcing fiber substrates, while the matrix resin is flown in the thickness direction of the reinforcing fiber substrate laminate and in the plain direction at a portion between layers of the laminate, the matrix resin is impregnated into the reinforcing fiber substrates, if the resin impregnation property in the thickness direction of the respective layers of the reinforcing fiber substrates is low, the matrix resin does not flow in the thickness direction and proceeds to be distributed in the plain direction, finally the matrix resin flows out from the end portion of the laminate into a suction hole, and non-impregnation portions are generated in a central portion of the laminate.

In the unidirectional reinforcing fiber substrate according to the present invention, although the spacer yarns arranged between the reinforcing fiber yarns are adjacent to the reinforcing fiber yarns with each other, because the surfaces of the spacer yarns have concave/convex forms and the convex portions form boundaries relative to the reinforcing fiber yarns, the concave portions form gaps in the thickness direction, the matrix resin can accelerate the flow of the matrix resin in the thickness direction by using the gaps as a resin path.

Although the method for providing concave/convex forms to the surface of the spacer yarns 86, is not particularly restricted, for example, when two threads are gathered by twisting, by overfeeding one thread, a yarn is formed wherein the overfed thread is wound around the other non-overfed thread, and a spacer yarn, with a surface concave/convex shape formed by the wound thread, can be obtained.

In order to enlarge the surface concave/convex, it is preferred to thicken the wound thread, for example, in a range of 20 to 150 tex. Further, in order to clearly create the concave/convex feeling, it is preferred to apply a twist in a range of 50 to 200 turns/m to the threads to be gathered beforehand, and to gather and twist the threads in a range of about 50 to about 300 turns/m in the same direction. Furthermore, it is further preferred to apply a reverse twist by another thread on the above-described two twisting threads, because the twist previously applied is fixed and untwisting torque ascribed to the twist does not act. The spacer yarn may be a double covering yarn in which covering threads are wound around a core yarn in S and Z directions. In this case, it is also preferred to thicken the threads to be wound in S and Z directions and apply twist to the threads in the covering/twist applying directions to the threads beforehand, because the difference between the maximum yarn width and the minimum yarn width can be enlarged. Here, the yarn width of the spacer yarn is a yarn width determined by measuring a yarn width in a direction perpendicular to the yarn axis by a microscope. In the present invention, the ratio of the yarn width of a maximum width to a minimum width determined by N=100 (times of measurement) is preferably 1.2 or more, more preferably 1.5 or more.

Although the kind of the spacer yarn may be glass fiber or carbon fiber, glass fiber is more preferred because glass fiber is inexpensive even if it is a small-yield yarn, and because it almost does not absorb water, a hot/wet property such as a property required for elements of aircraft does not reduce, and by carrying out a coupling treatment, the adhesive property with a matrix resin becomes excellent, it does not become a starting point of breakage. Although the yield of the spacer yarn is preferably great because the concave/convex can be formed great, if the diameter of the spacer yarn becomes larger than the thickness of the substrate, there occurs a problem at the time of lamination that a portion of the spacer yarn becomes thick and an adjacent layer waves, and therefore, it is preferred to set the maximum diameter of the spacer yarn substantially equal to the thickness of the substrate.

In order to flatten the surface of the substrate, it is most preferable to make the section of the reinforcing fiber yarn in a form of a rectangular. In practice, however, since the reinforcing fiber yarn is gathered with filaments in a circular form, even when the reinforcing fiber yarns are formed in a sheet, usually the reinforcing fiber yarn becomes an oval and the thickness of a portion between the reinforcing fiber yarns becomes smaller. However, by setting the diameter of the spacer yarn substantially equal to the thickness of the substrate, the thickness of a portion between the reinforcing fiber yarns is covered with the spacer yarn, even if laminated, the respective layers do not wave.

From the above-described reason, it is preferred that the areal weight of the woven fabric W (g/m$^2$) and the mean diameter of the spacer yarn D (mm) are in the following relationship.

$$D = W / (800 \text{ to } 1200)$$

As a second feature of the reinforcing fiber substrate according to embodiments of the present invention, a resin material is adhered to at least one surface of the reinforcing fiber sheet formed by arranging the above-described reinforcing fiber yarns 85 and spacer yarns 86 in one direction. As the resin material, a thermoplastic resin, a thermosetting resin, or a mixture thereof can be employed. In order to obtain the adhesive property for integrating the reinforcing fiber substrates or forming a preform, a thermoplastic resin or a thermosetting resin may be used solely. In a case where a resistance against impact such as CAI is required, a thermoplastic resin excellent in toughness is preferred.

As the thermoplastic resin, polyvinyl acetate, polycarbonate, polyacetal, polyphenyleneoxide, polyphenylenesulfide, polyallylate, polyester, polyamideimide, polyimide, polyetherimide, polysulfone, polyethersulfone, polyetheretherketone, polyaramide, polybenzoimidal, polyethylene, polypropylene, etc. can be employed.

As the thermosetting resin, epoxy resin, unsaturated polyester resin, vinylester resin, phenolic resin, etc. can be employed.

The adhesion amount is necessary to be in a range of 2 to 20 % by weight, preferably in a range of 5 to 20 % by weight. In a case where integration of the reinforcing fiber substrates is aimed, although the adhesion amount is preferred to be as much as possible, if more than 20 % by weight, there may occur a problem that a matrix resin flows through the substrate in the thickness direction of the substrate because the resin material covers the surface of the reinforcing fiber substrate, and therefore, an adhesion amount of 20 % by weight or less is preferred.

On the other hand, if the adhesion amount is less than 2 % by weight, not only the form cannot be maintained but also the adhesion at the time of lamination becomes insufficient and a desirable effect may not be obtained.

Although the resin material figure of the adhesion is not particularly restricted, it is preferred to be a studded formation (dot-like formation). In order to form such a studded formation, a method can be employed wherein the resin material is applied onto the reinforcing fiber substrate at a particle-like form with a diameter of 400 $\mu$m or less, and by heating, the particle-like resin material is softened or molten to be adhered to the substrate. Thus, by adhering the resin material at the studded formation, because the resin material does not cover the entire surface of the substrate, the impregnation of a matrix resin in the thickness direction is not greatly damaged, and such a condition is preferred. The glass transition temperature of the resin material is preferably in a range of 0 to 100˚C.

Although it is necessary to heat the resin material at a temperature of the glass transition temperature or higher and soften or melt the resin material when the resin material is adhered to the substrate, by setting the glass transition temperature at 100˚C or lower, it is possible to adhere the resin material without heating at a high temperature and it is not necessary to set the adhesion temperature for lamination at a high temperature, and therefore, such a condition is preferred. In a case where a tackiness is required, although a resin having a glass transition temperature as low as possible is preferable, if too low, there may be a problem that the high-temperature properties of a composite material to be molded is reduced, and therefore, the glass transition temperature is preferably 0˚C or higher.

Fig. 9 shows another embodiment of the unidirectional reinforcing fiber substrate according to the present invention. A reinforcing fiber substrate 82 according to the present invention is formed by arranging weft-direction auxiliary yarns 88 in a direction perpendicular to the above-described reinforcing fiber yarns 85 and spacer yarns 86 at a same pitch, and intersecting the weft-direction auxiliary yarns 88 with the reinforcing fiber yarns 85 and spacer yarns 86 to form a woven fabric structure.

By the woven fabric structure thus integrated, the reinforcing fiber yarns 85 and spacer yarns 86 are not separated from each other at the time of handling, and a substrate with an excellent handling property can be obtained. However, it is preferred that the weft-direction auxiliary yarns 88 are small-yield yarns, preferably with a yield of 10 tex or less, more preferably 3 tex or less, for the purpose of suppressing the crimps of the reinforcing fiber yarns as little as possible. If the yield of the weft-direction auxiliary yarns is more than 10 tex, the crimps of the reinforcing fiber yarns become greater, there may be a problem that particularly the compressive properties such as those required for elements of aircraft are remarkably reduced.

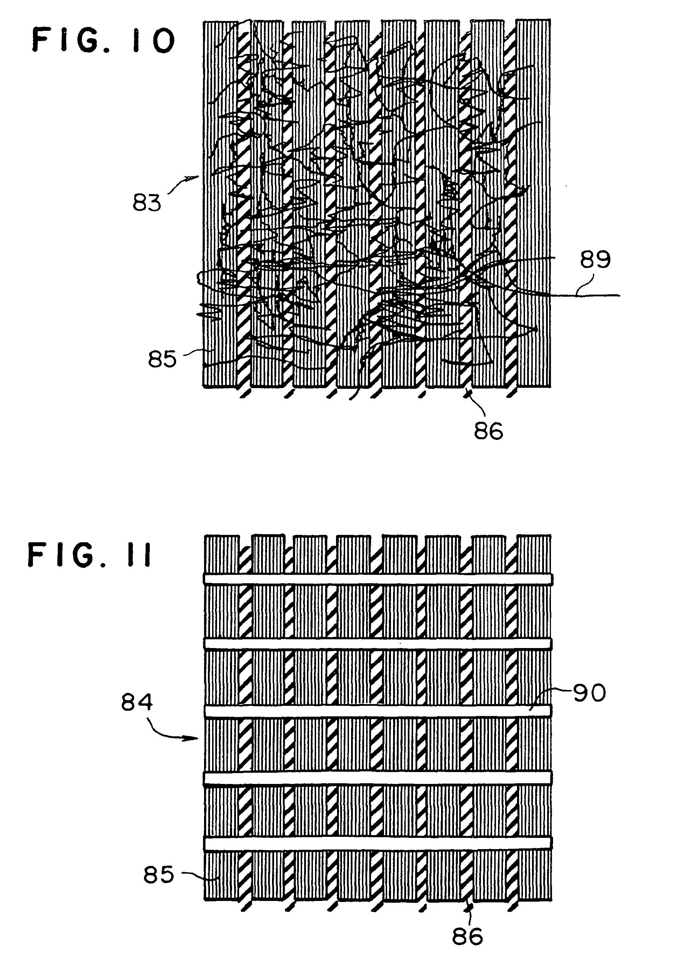

Fig. 10, which is included for reference purposes only, shows a reinforcing fiber substrate 83 wherein resin material 89 is adhered onto the reinforcing fiber sheet at a state dispersed at a fiber-like style.

Fig. 11, which is included for reference purposes only, shows a reinforcing fiber substrate 84 wherein resin material 90 is adhered at a style continuously extending at a long and slender strip-like shape in a direction perpendicular to the reinforcing fiber yarns 85 or the spacer yarns 86.

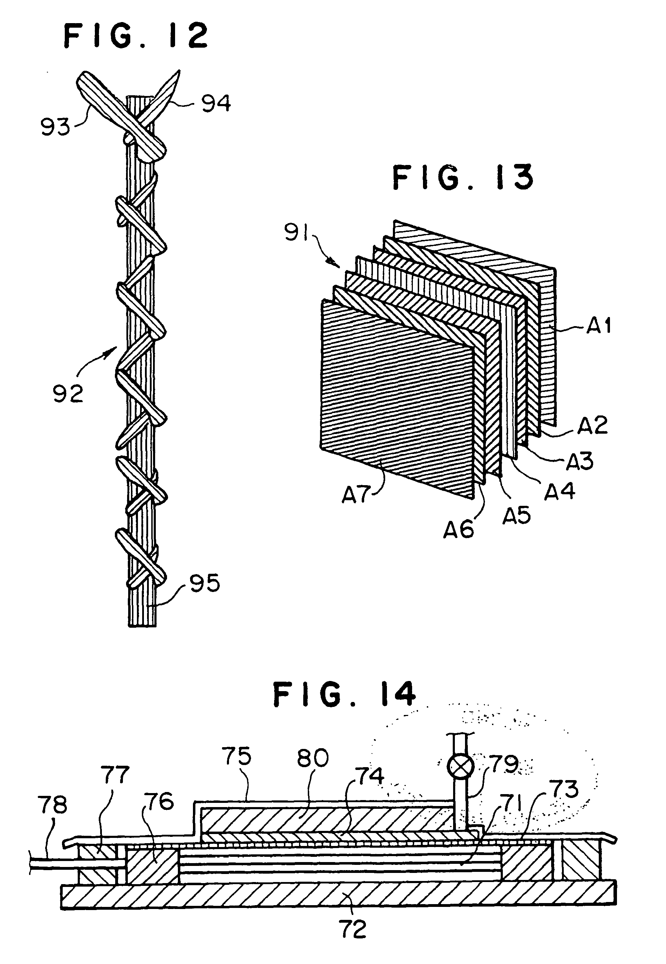

Fig. 12 shows an example for explanation of a spacer yarn used in the present invention, and shows a covering yarn 92 wherein a cover thread 94 is wound around a core yarn 95 in Z direction and further thereon a cover thread 93 is wound in S direction. As aforementioned, it is preferred to enlarge the surface concave/convex of the covering yarn 92 by setting the yield of the cover thread 93 great and sizing (collecting) them as much as possible by twisting.

In the above-described substrate, the reinforcing fiber yarn is a multifilament yarn, and although the kind thereof is not particular limited, for example, glass fiber, polyaramide fiber, PBO fiber, PVA fiber, carbon fiber, etc. can be raised. Among these, carbon fiber is preferably used for structural elements of aircraft because it is excellent in specific strength and specific elastic modulus.

Among carbon fibers, carbon fiber having a tensile strength of 4,500 MPa or more and a tensile modulus of 250 GPa or more determined based on JIS-R7601 is preferred for aircraft because a composite material with a high toughness can be obtained. Further, since carbon fiber is cheaper in manufacturing cost as the yield is greater, it is preferred to use a thick carbon fiber yarn from the viewpoint of cost of substrate, but it has a limitation on the relationship with the areal weight of the substrate.

In the unidirectional reinforcing fiber substrate, it is preferred that the relationship between the areal weight of the substrate W (g/m$^2$) and the yield of the carbon fiber T (tex) satisfies the following equation.

$$W = k \cdot T^{1/2}$$

Where, k = 5 to 15

Fig. 1 is a plan view of a preform 91 according to the present invention, wherein a plurality of the aforementioned unidirectional reinforcing fiber substrates A1-A7 are laminated across each other and integrated by a resin material. In a composite material, rare is a case where unidirectional reinforcing fiber substrates are laminated all in the same direction, and usually a quasi-isotropic lamination is employed. Although the lamination structure is decided depending on the requirements of an element in practice, in primary structural elements of aircraft, rate of a same-direction lamination is greater. The lamination structure of the respective unidirectional reinforcing fiber substrates in the preform 91 according to the present invention is not particularly restricted, and it is appropriately selected depending upon the requirements of a composite material. Further, the unidirectional reinforcing fiber substrates according to the present invention and other reinforcing fiber substrates, for example, bidirectional woven fabric substrates, may be combined. In the preform 91 according to the present invention, because a liquid matrix resin can be easily impregnated in the thickness direction by a resin path formed by the gaps of the concave portions of the spacer yarns of the unidirectional reinforcing fiber substrates forming the preform even if the preform is formed to be thick, a composite material can be obtained without generating non-impregnation portions.

Next, the composite material (fiber reinforced resin molded product) according to the present invention is formed by impregnating a matrix resin into the above-described preform and curing it.

As the method for producing a composite material according to the present invention, a method can be employed for setting the above-described preform in a mold, injecting a liquid resin at a condition where the inside of the mold is reduced in pressure, and curing the resin after impregnating the resin into the substrates.

The matrix resin can be impregnated in a shorter period of time as the viscosity is lower. As such a viscosity of a matrix resin, a viscosity at the injection temperature is preferably 400mPa s or less, more preferably 200mPa s or less. Further, a viscosity at the injection temperature after one hour is preferably 600mPa s or less, more preferably 400mPa s or less. If the injection temperature is 100°C or lower, because the device and the work can be simplified, such a condition is preferred.

As the kind of the matrix resin, for example, at least one selected from the group consisting of epoxy resin, phenol resin, vinylester resin, unsaturated polyester resin, cyanate ester resin, bismaleimide resin, benzooxadine resin and acrylic resin can be employed.

Since the composite material (fiber reinforced resin molded product) according to the present invention can be used for elements of aircraft, in order to provide a toughness to it, it is possible to add an elastomer or a rubber to the above-described resin and further it is possible to add a curing agent, a catalyst, etc. thereto.

EXAMPLES

Hereinafter, the present invention will be explained based on examples and comparative examples. Where, the materials used in the examples and comparative examples and the molding methods are as follows. 1. Reinforcing fiber yarn:

<Reinforcing fiber yarn A>

PAN-system carbon fiber, 24,000 filaments, yield: 1,030 tex, tensile strength: 5.9 GPa, tensile elastic modulus: 295 GPa, elongation at failure: 2.0 %, strain energy at failure: 59 MJ/m$^3$

<Reinforcing fiber yarn B>

PAN-system carbon fiber, 6,000 filaments, yield: 396 tex, tensile strength: 3.5 GPa, tensile elastic modulus: 235 GPa, elongation at failure: 1.5 %, strain energy at failure: 26 MJ/m$^3$

<Reinforcing fiber yarn C>

PAN-system carbon fiber, 24,000 filaments, yield: 1,030 tex, tensile strength: 5.8 GPa, tensile elastic modulus: 295 GPa 2. Auxiliary yarn:

<Auxiliary yarn A>

glass fiber, ECE225 1/0 1.0Z, yield: 22.5 tex, elongation:

3 % or more, binder-type "DP" (produced by Nitto Bouselki Co., Ltd., Japanese company)

<Auxiliary yarn B>

polyamide 66 fiber, 7 filaments, yield: 1.7 tex, melting point: 255˚C, oil component: 0.6 %

<Auxiliary yarn C>

PAN-system carbon fiber, 1,000 filaments, yield: 66 tex, tensile strength: 3.5 GPa, tensile elastic modulus: 235 GPa, elongation at failure: 1.5 %, strain energy at failure: 26 MJ/m$^3$

<Auxiliary yarn D>

low-melting point polyamide fiber (copolymerized polyamide fiber), 10 filaments, yield: 5.5 tex, melting point: 115˚C

3. Resin material:

The resin composition prepared by hot-melt kneading 60 % by weight of polyethersulfone resin (produced by Sumitomo Chemical Co., Ltd., Japanese company, "Sumika Excel" (registered trade mark) 5003P) (main component) and 40 % by weight of the following epoxy resin composition by a twin-screw extruder and compatibly melting them, was ground at a refrigeration condition into a form of particles. Mean particle diameter $D_{50}$ (determined by LMS-24 produced by Seisin Enterprise Co., Ltd. (Japanese company) using laser diffraction dispersion method): 115 μm, Glass transition temperature: 92˚C.
Epoxy resin composition: mixture uniformly blended at 100˚C of 21 parts by weight of "Epikote" (registered trade mark) 806 produced by Japan Epoxy Resins Co. Ltd., 12.5 parts by weight of NC-3000 produced by Nippon Kayaku Co., Ltd., Japanese company, and 4 parts by weight of TEPIC-P produced by Nissan Chemical Industries, Ltd., Japanese company

4. Matrix resin:

39 parts by weight of the following curing agent was added to 100 parts by weight of the following main liquid, and they were mixed uniformly at 80˚C to prepare an epoxy resin composition. viscosity at 80˚C determined by a Model E viscometer: 55 mPa s, viscosity after one hour: 180 mPa · s, glass transition temperature after curing at 180˚C for two hours: 197˚C, flexural elastic modulus (JIS-K7171): 3.3 GPa
Main liquid: an epoxy composition prepared by uniformly mixing and dissolving 40 parts by weight of "Araldite" (registered trade mark) MY-721 produced by Vantico Inc., 3.5 parts by weight of "Epikote" (registered trade mark) 825 produced by Japan Epoxy Resins Co. Ltd., 15 parts by weight of GAN produced by Nippon Kayaku Co. Ltd., and 10 parts by weight of "Epikote" (registered trade mark) 630 produced by Japan Epoxy Resins Co. Ltd., at 70˚C for one hour
Curing agent: a polyamine composition prepared by uniformly mixing and dissolving 70 parts by weight of "Epikure" (registered trade mark) W produced by Japan Epoxy Resins Co. Ltd., 20 parts by weight of 3,3'-diaminophenylsulfone produced by Mitsui Kagaku Fine Chemical, Inc., Japanese company, and 10 parts by weight of "Sumicure" (registered trade mark) S produced by Sumitomo Chemical Co., Ltd. at 100˚C for one hour, thereafter lowering the temperature down to 70˚C, and thereto, further uniformly mixing and dissolving 2 parts by weight of t-butylcatechol as a curing acceleration agent at 70˚C for 30 minutes

Example 1 :

A sheet-like reinforcing fiber yarn group with a width of 1 m was formed by arranging 184 reinforcing fiber yarns A in parallel to each other (drawing step), and arranging them in one direction at warp ends of 1.8 yarns/cm. Further, a warp-direction auxiliary yarn group was formed by arranging the above-described auxiliary yarns A in parallel to each other and arranging them in the same one direction as the direction of the reinforcing fiber yarn A group alternately with the reinforcing fiber yarns A at warp ends of 1.8 yarns/cm. A sheet-like warp-direction yarn group was formed using both yarn groups. Next, the weft-direction auxiliary yarns B were arranged in parallel to each other and arranged at weft ends of 3 yarns/cm in a direction perpendicular to the warp-direction yarn group, and the auxiliary yarns A and the auxiliary yarns B were intersected at a plain weave structure using a loom to form a unidirectional non-crimp woven fabric. While particle-like resin material was uniformly dispersed on such a unidirectional non-crimp woven fabric by Tribomatic II powder coating system produced by Nordson Corporation, the resin material was applied on the surface by 26 g/m$^2$ (14 % by weight), it was passed through an infrared-ray heater at a condition of 185˚C and 0.3 m/min., and the resin material was thus adhered to one surface of the substrate (substrate forming step). Then, the substrate was nipped by releasing papers, passed continuously through press rollers having a temperature of 160˚C (pressing step), and after cooled, it was wound at a roll (winding step).

In the reinforcing fiber substrate obtained, because the intersections were fixed by the resin material, not only the handling property was excellent, but also the straightness of the reinforcing fiber yarns could be maintained. Further, the bulk of the substrate was low, the substrate was flat and very excellent in handling property, and it was a level available to be automated for lamination. The areal weight of the reinforcing fiber yarns was 190 $g/m^2$ the thickness of the substrate was 0.24 mm, and $V_{pf}$ was 44 %.

Comparative Example 1 :

A reinforcing fiber substrate was prepared in a manner similar to that in Example 1 other than conditions where at the substrate forming step, the unidirectional woven fabric was formed by arranging the weft-direction auxiliary yarns A in parallel to each other, arranging the auxiliary yarns A at weft ends of 3 yarns/cm in a direction perpendicular to the reinforcing fiber yarn A group, intersecting the reinforcing fiber yarns A and the weft-direction auxiliary yarns A to form a unidirectional woven fabric with a plain weave structure using a weaving machine, and the unidirectional woven fabric was not passed through the pressing step.

The reinforcing fiber substrate obtained was high in bulk, and the surface concave/convex was great. The areal weight of the reinforcing fiber yarns was 190 $g/m^2$ the thickness of the substrate was 0.34 mm, and $V_{pf}$ was 31 %.

Example 2, Comparative Example 2:

Using the reinforcing fiber substrates prepared in Example 1 and Comparative Example 1, composite materials aiming to satisfy the aforementioned factors (a) to (c) were molded by the following molding method, and the molded composite materials were estimated.

<Molding method>

Hereinafter, the molding method according to the present invention will be explained referring to the drawing.

Fig. 14 is a schematic vertical sectional view of an example of an apparatus for molding a composite material according to the present invention. As shown in Fig. 14, reinforcing fiber substrates 71 are laminated by a predetermined number and a predetermined angle on the surface of a plate-like aluminum mold 72. A polyester fiber woven fabric treated with a releasing treatment, which is a peeling ply 73, is disposed on the uppermost surface of the laminate, and thereon, a resin distribution medium 74 composed of a polypropylene mesh-like sheet is disposed, and further thereon, an aluminum cowl plate 80 functioning as a pressing plate is placed. A plurality of polyester nonwoven fabrics, which form edge breathers 76, are laminated and disposed around the contact portion of the laminate with the mold. The medium is disposed so that the distance between a vacuum port 78 or the edge breather 76 and the nearest portion of the medium is 10 mm or more and the maximum outline of the plan view of the medium is smaller by about 10 to about 50 mm than the outline of the plan view of the laminate at the position facing the medium (plan vie: not shown). The whole of them are covered with a nylon film, which forms a bag material 75, the portion around the bag material 75 and the mold 72 is sealed by a seal material 77. A resin injection port 79 is attached so as to be brought into contact with the medium, and sealed by the seal material. The vacuum port 78 is attached onto edge breather 76 far from the resin injection port 79, and sealed similarly. By sucking from the vacuum port 78, the inside of the bag material 75 is vacuumed so that the reduced pressure becomes a pressure in a range of 0.08 to 0.1 MPa. The entire device is heated up to 80˚C at a heating speed of 3˚C/min. While continuing the vacuum operation, after the laminate reaches 80˚C, that state is kept for one hour. Thereafter, the valve of the resin injection port 79 is opened, and a matrix resin is injected by atmospheric pressure through the medium by a necessary amount. After completing the impregnation, the valve of the resin injection port 79 is closed, and the injection of the matrix resin is stopped. Where, the vacuum operation is continued for 4 hours from the start of the injection. The entire device is heated up to 130˚C at a heating speed of 1.5˚C/min, At the time reaching 130˚C, the vacuum operation is stopped by sealing the vacuum port 78. At that time, the inside of the bag material 75 is sealed so that the vacuum condition is maintained. After reaching 130˚C, the condition is kept for two hours to cure the matrix resin. Then, the temperature is lowered down to a room temperature at a speed of 3˚C/min. The peeling ply 73 and the medium 74 are removed, and a composite material is once taken out. Then, the composite material is placed on the mold (free standing condition), and heated up to 180˚C at a heating speed of 1.5˚C/min. After reaching 180˚C, the condition is kept for two hours to cure the matrix resin secondarily. Thereafter, the temperature is lowered down to a room temperature at a speed of 3˚C/min. to obtain a composite material. The result described above is shown in Table 1.

Table 1

| | $V_{pf}$ (Thickness) | Amount of resin material per unit area (Content) | Thickness ratio of yarn | Maximum deflection | Example 2, Comparative Example 2 | | | |
|---|---|---|---|---|---|---|---|---|
| | | | | | a | b | c | |
| | | | | | CAI/RT ($V_f$) | NHC/RT ($V_f$) | CS/RT ($V_f$) | CS/HW ($V_f$) |
| Example 1,2 | 44% (0.24mm) | 26g/m$^2$ (12wt%) | 0.4 | 0.13mm | 260MPa (58%) | 605MPa (60%) | 1570MPa (57%) | 1220MPa) (57%) |
| Comparative Example 1,2 | 31% (0.34mm) | 26g/m$^2$ (12wt%) | 0.1 | 0.32mm | 265MPa (56%) | 460MPa (56%) | 1290MPa (58%) | 1030MPa (58%) |

As understood from Table 1, with respect to the mechanical properties, the composite material of Example 2 satisfied all the factors (a) to (c) and indicated very high values. Further, as the result of observing the sections of the composite materials, the waviness of the reinforcing fiber substrates in Example 1 was small as compared with that in Comparative Example 1. It is considered that the extremely high mechanical properties were exhibited originating from this condition.

Example 3 :

The reinforcing fiber yarns A were arranged in parallel to each other and arranged in one direction at warp ends of 1.8 end/cm to form a sheet-like reinforcing fiber yarn A group. The auxiliary yarns B (polyamide fiber yarns) were arranged in parallel to each other and arranged in a direction perpendicular to the reinforcing fiber yarn A group at weft ends of 1 end/cm, intersecting the reinforcing fiber yarns A, to form a nonwoven structure.

While the resin material was uniformly dispersed by pressurized air using Tribomatic II powder coating system produced by Nordson Corporation, the resin material was applied onto the surface by 4 % by weight. Thereafter, the substrate was nipped with releasing papers and passed through a hot press roller (width: 30 cm) at conditions of 180˚C, a cylinder pressure of 0.2 MPa (pressing force: 1.5 kN) and 0.5 m/min., to adhere the resin material onto the surface. As to the back surface, similarly the resin material was adhered by 8 $g/m^2$ (4 % by weight), and the resin material was adhered to the surface and the back surface totally at an amount of 16 $g/m^2$(8 % by weight).

In the obtained unidirectional reinforcing fiber fabric, although the fabric at a condition of the nonwoven structure before adhesion of the resin material could not be handled solely, after adhesion of the resin material, the carbon fiber yarns and the polyamide fiber yarns were fixed by the resin material, and the handling became possible. The areal weight of the auxiliary fibers was 0.2 $g/m^2$and 0.1 % of the areal weight of the carbon fibers (190 $g/m^2$, the thickness of the polyamide fiber yarn was 30 $\mu$m, and there was substantially no gaps between the reinforcing fiber yarns A.

Example 4:

The auxiliary yarns B (polyamide fiber yarns) were arranged in parallel to each other and arranged in a direction perpendicular to the reinforcing fiber yarn A group of Example 3 at weft ends of 3 end/cm, the reinforcing fiber yarns A and the auxiliary yarns B were intersected to form a plain weave structure using a loom (unidirectional woven fabric).

The resin material was naturally dropped while being metered using an emboss roller and a doctor blade, and the resin material was applied onto the surface by 15 $g/m^2$ (7 % by weight) while being uniformly dispersed via a vibration net. Thereafter, the substrate was passed through an infrared-ray heater at conditions of 185˚C and 0.3 m/min., to adhere the resin material only to the surface. The back surface was not adhered with the resin material.

In the obtained unidirectional reinforcing fiber fabric, because the fabric was fixed by the intersection of the reinforcing fiber yarns A and the auxiliary yarns B in addition to the fixing due to the resin material, the formation stability was more excellent than that in Example 3. The areal weight of the auxiliary fibers was 0.5 $g/m^2$ and 0.3 % of the areal weight of the carbon fibers (190 $g/m^2$, the thickness of the polyamide fiber yarn was 30 $\mu$m, and the gap between the reinforcing fiber yarns A was 0.2 mm.

Example 5:

A unidirectional woven fabric was obtained in a manner similar to that in Example 4 other than conditions of using the reinforcing fiber yarns A at warp ends of 2.8 end/cm and applying the resin material at 23 $g/m^2$ (7 % by weight).

In the obtained unidirectional reinforcing fiber fabric, because the fabric was fixed by more intersections of the reinforcing fiber yarns A and the auxiliary yarns B, the formation stability was more excellent than that in Example 4. The areal weight of the auxiliary fibers was 0.5 $g/m^2$ and 0.2 % of the areal weight of the carbon fibers (285 $g/m^2$), the thickness of the polyamide fiber yarn was 30 $\mu$m, and the gap between the reinforcing fiber yarns A was 0.1 mm.

Example 6:

A unidirectional woven fabric was obtained in a manner similar to that in Example 4 other than a condition of using the reinforcing fiber yarns B at warp ends of 4.8 end/cm.

In the obtained unidirectional reinforcing fiber fabric, because the fabric was fixed by more intersections of the reinforcing fiber yarns B and the auxiliary yarns B, the formation stability was more excellent than that in Example 4. The areal weight of the auxiliary fibers was 0.5 $g/m^2$and 0.3 % of the areal weight of the carbon fibers (190 $g/m^2$), the thickness of the polyamide fiber yarn was 30 $\mu$m, and the gap between the reinforcing fiber yarns A was 0.1 mm.

Example 7:

Warp-direction auxiliary yarns (collected yarn A prepared by covering the auxiliary yarn A (glass fiber yarn) with the auxiliary yarn D (low-melting point polyamide fiber yarn) at 250 turns/m) were arranged in parallel to each other, and arranged at warp ends of 1.8 end/cm in one direction which was the same direction of the reinforcing fiber yarn A group in Example 3. A sheet-like composite yarn group was formed by arranging the reinforcing fiber yarns A and the sized (collected) yarns A alternately and using both yarns.

The auxiliary yarns B (polyamide fiber yarn) were arranged in parallel to each other and arranged at weft ends of 3 end/cm in a direction perpendicular to the composite yarn group, and a plain weave structure was formed by intersecting the sized (collected) yarns A and the auxiliary yarns B using a loom (a unidirectional non-crimp woven fabric). The resin material was adhered in a manner similar to that in Example 4 at 27 g/m$^2$ ( 12 % by weight).

In the obtained unidirectional reinforcing fiber fabric, because the fabric was fixed by strong intersection of the collected yarns A and the polyamide fiber yarns, the formation stability was further more excellent than that in Example 4. The areal weight of the auxiliary fibers was 0.5 g/m$^2$ and 0.3 % of the areal weight of the carbon fibers (190 g/m$^2$), and the thickness of the polyamide fiber yarn was 30 $\mu$m. The gap between the reinforcing fiber yarns A was 0.4 mm, and the gap was formed to be wider than that in Example 4 by the arrangement of the collected yarns A.

Example 8:

A unidirectional woven fabric was obtained in a manner similar to that in Example 7 other than a condition of using the auxiliary yarns C (carbon fiber yarn) as the warp-direction auxiliary yarns. In the obtained unidirectional reinforcing fiber fabric, because the fabric was fixed by strong intersection of the reinforcing fiber yarns A and the auxiliary yarns C, the formation stability was further more excellent than that in Example 4. The areal weight of the warp-direction auxiliary fibers was 13 g/m$^2$ and 6.8 % of the areal weight of the reinforcing fibers, and the gap between the reinforcing fiber yarns A was formed to be wider than that in Example 7 by the arrangement of the auxiliary yarns C. Example 9:

As to the nonwoven structure formed in Example 3, a composite weave structure was formed using a multi-axis stitching machine so that the warp-direction auxiliary yarns (auxiliary yarn B: polyamide fiber yarn) were arranged between the reinforcing fiber yarns at a chain stitching structure and at 5 gage (5 wales/25 mm). Where, the auxiliary yarns B were inserted in the weft direction so that a hollow knitting style was formed. A nylon 12 nonwoven fabric (2 g/m$^2$, made by melt blow) was used as a support material. In such a structure, it is possible to handle it solely. The resin material was adhered similarly in Example 4.

In the obtained unidirectional reinforcing fiber fabric, because the fabric was fixed by strong intersection of the polyamide fiber yarns in addition to the fixing due to the resin material, the formation stability was further excellent. The areal weight of the auxiliary fibers was 0.5 g/m$^2$ and 0.3 % of the areal weight of the carbon fibers (190 g/m$^2$), and the thickness of the polyamide fiber yarn was 30 $\mu$m. The areal weight of the warp-direction auxiliary fibers was 1.1 g/m$^2$ and 0.6 % of the areal weight of the carbon fibers (190 g/m$^2$. The gap between the reinforcing fiber yarns A was 0.4 mm, and the gap was formed to be wide equal to or more than that in Example 6 by the arrangement of the the warp-direction auxiliary yarns.

Example 10:

Using the unidirectional reinforcing fiber fabrics prepared in Examples 3 to 9, composite materials aiming to satisfy the aforementioned factors (a), (c) and (d) were molded by the aforementioned molding method, and the molded composite materials were estimated with respect to the aforementioned compressive strength at a room temperature after impact (CAI), open-hole compressive strength at a room temperature (OHC/RT), open-hole compressive strength at a high temperature after a hot/wet conditioning (OHC/HW), 0° compressive strength at a room temperature (CS/RT) and 0° compressive strength at a high temperature after a hot/wet conditioning (CS/HW).

The unidirectional reinforcing fiber fabrics obtained in Examples 3 to 9 were excellent in tack property, etc. at the time of lamination, and could shorten the molding times. Further, no non-impregnated portion was observed in the obtained composite materials, and achievement of good molding was proved.

Comparative Example 3:

A unidirectional woven fabric was obtained in a manner similar to that of Example 4 other than a condition of using reinforcing fiber yarns A and the auxiliary yarns A (glass fiber yarn). Although the obtained unidirectional reinforcing fiber fabric was good in handling property, the mechanical properties of a composite to be molded were poor described later. The areal weight of the auxiliary fibers was 6.8 g/m$^2$ and 3.6 % of the areal weight of the carbon fibers, the thickness of the glass fiber yarn was 60 $\mu$m, and the gap between the reinforcing fiber yarns A was 0.2 mm.

Comparative Example 4:

A unidirectional non-crimp woven fabric was obtained in a manner similar to that of Example 7 other than a condition where the resin material was not used. Because the resin material was not used, the obtained unidirectional reinforcing fiber fabric was remarkably poor in handling property and formation stability as compared with Example 7.

Comparative Example 5:

As to the unidirectional reinforcing fiber fabrics obtained in Comparative Examples 3 and 4, composite materials were molded similarly in Example 10 and served to estimation. Although the composite material of Comparative Example 3 exhibited a tack property by the resin material, the composite material of Comparative Example 4 did not exhibit a tack property at the time of lamination, needed a long time for lamination, and was poor in productivity.
The results described above are shown in Table 2.

Table 2

| | Yield rate of weft-direction auxiliary yarn to reinforcing fiber yarn | Yield rate of warp-direction auxiliary yarn to reinforcing fiber yarn | Adhesion amount of resin material | Handling property of unidirectional reinforcing fiber fabric | Example 10, Comparative Example 5 | | | | | Impregnation property in (a) when composite material is molded |
| | | | | | a | b | | c | | |
| | | | | | CAI (Reinforcing fiber volume fraction, $V_f$) | OHC/RT ($V_f$) | OHC/HW ($V_f$) | CS/RT ($V_f$) | CS/HW ($V_f$) | |
|---|---|---|---|---|---|---|---|---|---|---|
| Example 3 | 0.2% | none | 8wt% | ○ | 272MPa (59%) | 297MPa (60%) | 240MPa (60%) | 1660MPa (60%) | 1310MPa (60%) | △ partially not impregnated impregnation time: long |
| Example 4 | 0.2% | none | 7wt% | ○ | 264MPa (58%) | 283MPa (59%) | 228MPa (59%) | 1630MPa (60%) | 1290MPa (60%) | ○ all layers impregnated impregnation time: middle |
| Example 5 | 0.2% | none | 7wt% | ◎ | 252MPa (58%) | 289MPa (61%) | 238MPa (61%) | 1510MPa (61%) | 1220MPa (61%) | ◎ all layers impregnated impregnation time: short |
| Example 6 | 0.4% | none | 7wt% | ◎ | 198MPa (58%) | - ( - ) | - ( - ) | - ( - ) | - ( - ) | ○ all layers impregnated impregnation time: middle |
| Example 7 | 0.2% | 2.7% | 12wt% | ◎ | 280MPa (58%) | 292MPa (59%) | 236MPa (59%) | 1630MPa (59%) | 1260MPa (59%) | ◎ all layers impregnated impregnation time: short |
| Example 8 | 0.2% | 6.4% | 12wt% | ◎ | 283MPa (57%) | - ( - ) | - ( - ) | 1680MPa (58%) | 1320MPa (58%) | ◎ all layers impregnated impregnation time: short |

(continued)

| | Yield rate of weft-direction auxiliary yarn to reinforcing fiber yarn | Yield rate of warp-direction auxiliary yarn to reinforcing fiber yarn | Adhesion amount of resin material | Handling property of unidirectional reinforcing fiber fabric | Example 10, Comparative Example 5 | | | | | Impregnation property in (a) when composite material is molded |
|---|---|---|---|---|---|---|---|---|---|---|
| | | | | | a | b | | c | | |
| | | | | | CAI (Reinforcing fiber volume fraction, $V_f$) | OHC/RT ($V_f$) | OHC/HW ($V_f$) | CS/RT ($V_f$) | CS/HW ($V_f$) | |
| Example 9 | 0.2% | 0.2% | 7wt% | ◎ | 255MPa (58%) | - ( - ) | - ( - ) | 1580MPa (60%) | 1200MPa (60%) | ◎ all layers impregnated impregnation time: short |
| Comparative Example 3 | 2% | none | 7wt% | ◎ | 249MPa (58%) | 269MPa (59%) | 208MPa (59%) | 1310MPa (60%) | 1050MPa (60%) | ◎ all layers impregnated impregnation time: short |
| Comparative Example 4 | 0.2% | 2% | none | × | 130MPa (62%) | 290MPa (62%) | 241MPa (62%) | 1670MPa (63%) | 1280MPa (60%) | Δ partially not impregnated impregnation time: long |

With respect to mechanical properties, the composite materials of Examples satisfied all the above-described factors and indicated very high values. In particular, the composite materials of Examples 3 and 7 exhibited excellent properties. Because the composite material of Example 6 was poor in strain energy at failure of carbon fibers, the CAI thereof greatly deceased as compared with that of Example 4.

As the result of observing the sections of the composite materials, the section of the carbon fiber yarn in the composite material of Example 7 was a rectangular-like shape, but that of Example 4 was an oval-like shape. In Example 3, no marks of yarns were remain. The waviness of the unidirectional reinforcing fiber fabric layer of Example 7 was remarkably small as compared with that of Example 4, and it was almost the same as that of Example 3. It is considered that, originating from this, extremely high mechanical properties could be exhibited.

On the other hand, in Comparative Example 3, because the yield of the auxiliary yarns was out of the range according to the present invention, particularly the OHC and CS were poor. The composite material of Comparative Example 4 was remarkably poor in CAI.

With respect to the handling property and the impregnation property of matrix resin of unidirectional reinforcing fiber substrate, the substrates of Examples 5, 7, 8 and 9 were excellent as compared with those of Examples 3 and 4. In Comparative Example 4, because the resin material was not used, the impregnation property thereof was the same level or less as compared with those of Examples 3 and 4. Namely, one of the most preferable embodiments is that of Example 7.

Example 11:

With respect to the substrate and the covering yarn shown in Figs. 9 and 12, the reinforcing fiber yarns C (carbon fiber yarn) were arranged as the reinforcing fiber yarns 5 at warp ends of 1.87 yarns/cm, and as the spacer yarns 6, double covering yarns were prepared wherein two glass yarns ECE225 1 /0 were arranged as a core yarn, and thereon glass yarns ECE225 1/0 were double-covered in S/Z directions respectively at 300 turns/m, and the spacer yarns were arranged between the reinforcing fiber yarns as warp (warp-direction auxiliary yarn), and using polyamide 66 filamentary yarns with a yield of 1.7 tex as wefts at weft ends of 3.0 yarns/cm, a plain weave was structured with the carbon fiber yarns and the spacer yarns. The ratio of the maximum width/the minimum width of the covering yarn was 1.6.

After preparing the woven fabric, particles made by grinding a resin material of a resin composition with a rate of polyethersulfone and epoxy resin of 60:40 (glass transition temperature: 62°C) were applied onto the woven fabric at 28 g/m$^2$, the resin material was adhered to the surface of the woven fabric by heating using an infrared-ray heater to form a unidirectional reinforcing fiber substrate according to the present invention. 24 sheets of the obtained unidirectional reinforcing fiber substrates with a size of 70 cm x 70 cm were laminated at a lamination structure of $[-45°/0°/+45°/90°]_{3S}$ to obtain a reinforcing fiber substrate laminate (dry preform).

The reinforcing fiber substrate laminate was set on a molding plate, it was covered with a bag film at a condition where an injection hole was provided at the central position of the upper portion of the laminate, they were sealed at a portion between the bag film and the molding plate by a seal tape, and the inside of the bag film was reduced in pressure.

After the prepared laminate substrate was heated at 70°C for one hour, using a liquid resin as a matrix resin whose viscosity at 70°C was 130 mPa · s and whose viscosity at 70°C after one hour was 320 mPa s, resin impregnation was carried out. After the resin impregnation, it was observed that the resin was flown up to the vacuum tube.

Then, after 1.5 hours expired after the resin injection, it was heated up to 130°C at a heating speed of 1.5°C/min., and after it was kept at 130°C for two hours, the bag film was removed and a molded product was taken out. The molded product was after-cured at 180°C for two hours to obtain a final product.

There was almost no waviness of each layer in the section of the obtained molded product, and it was about a level in the section of a molded product obtained by a conventional autoclave molding using a prepreg.

Comparative Example 6:

By a method similar to that of Example 11 other than a condition where spacer yarn 6 were not used, a woven fabric was prepared, a resin material was adhered, and a reinforcing fiber substrate laminate (dry preform) was obtained, and the molding was carried out by the same method as that of Example 11.

However, in the woven fabric of Comparative Example 6, because there were no gaps due to the spacer yarns which should be resin path, the resin did not reach the lowermost surface in 60 minutes, and therefore the molding was stopped. When the section of the central portion of the molded product was observed, although the resin reached only the central portion of the lowermost surface with a diameter of about 20 cm and that portion was wet, the matrix resin did not reach a portion therearound at all.

In order to clarify a difference between the unidirectional reinforcing fiber substrates of Example 11 and Comparative Example 6, as the result of determining air permeability (JIS-L1096 or ASTM-D737, frazier type) of the substrates, the substrate of Example 11 had a value of 56 cm$^3$/ (cm$^2$. sec) while the substrate of Comparative Example 6 had a

value of 12 cm$^3$/(cm$^2$·sec), and it was found that there was a big difference therebetween.

Any of the particular features in a reinforcing fiber substrate present in any of aspects 1 - 3 of the invention, as set out herein, or composite containing it, may, where appropriate, be present as an optional additional feature in a reinforcing fiber substrate according to any other of aspects 1 - 3. Thus, a substrate according to the second or third aspect may have a $V_{pf}$ in the range of 40 - 60%. A substrate according to the first or third aspect may have an auxiliary weft which may have a yield of 1% or yield of the reinforcing fiber yarn. A substrate according to the first or second aspect may additionally include spacer yarns between the parallel continuous reinforcing fiber yarns, which spacer yarns may have a concave/convex surface. Likewise, any additional optional feature described in relation to a particular aspect of the invention, may, where appropriate, be present in a reinforcing fiber substrate according to any other aspect.

**Claims**

1. A reinforcing fiber substrate (11), having a reinforcing fiber yarn group arranged with reinforcing fiber yarns (15) in parallel to each other in one direction and a weft-direction auxiliary yarn group formed by auxiliary yarns (13) extending in a direction across the reinforcing fiber yarns, **characterised in that** the reinforcing fiber yarns are carbon fiber yarns with a yield in a range of 800 to 1,700 tex, the weft-direction auxiliary yarns have a yield of 8 tex or less and which is no more than 1% of the yield of the reinforcing fiber yarn, and a powder like resin material (14) which does not cover the entire surface of the substrate is provided at 0.5 to 20% by weight at least on a surface of the reinforcing fiber substrate.

2. A reinforcing fiber substrate according to claim 1, wherein the substrate has a warp-direction auxiliary yarn group formed by auxiliary yarns (44) extending in a direction parallel to the reinforcing fiber yarns (42), and the yield of the auxiliary yarn forming the warp-direction auxiliary yarn group is no more than 20% of the yield of the reinforcing fiber yarn.

3. A reinforcing fiber substrate according to any preceding claims, wherein the substrate has a warp-direction auxiliary yarn group formed by auxiliary yarns extending in a direction parallel to the reinforcing fiber yarns, a weft-direction auxiliary yarn group is disposed on each surface of the substrate, and the substrate is formed as a unidirectional noncrimp woven fabric, the weave structure of which is formed by auxiliary yarns forming the warp-direction auxiliary yarn group and auxiliary yarns forming the weft-direction auxiliary yarn group.

4. A reinforcing fiber substrate according to any of claims 1 to 3, wherein a mean gap between adjacent reinforcing fiber yarns is in a range of 0.1 to 1 mm.

5. A reinforcing fiber substrate according to any of claims 1 to 4, wherein the resin material is studded on a surface of the reinforcing fiber substrate, a mean diameter of the studded resin material on the surface of the reinforcing fiber substrate, viewed in plane, is 1 mm or less, and a mean height of the studded resin material from the surface of the reinforcing fiber substrate is in a range of 5 to 250 $\mu$m.

6. A reinforcing fiber substrate according to any of claims 1 to 5, wherein the reinforcing fiber volume fraction $V_{pf}$ of the reinforcing fiber substrate, calculated from a thickness of the reinforcing fiber substrate which is determined based on JIS-R7602, is in the range of 40 to 60%.

7. A reinforcing fiber substrate (81) according to any one of the preceding claims, wherein warp-direction auxiliary yarns (86) which have a concave/convex surface are arranged between reinforcing fiber yarns (85).

8. A reinforcing fiber substrate according to any of claims 2 to 7, wherein a sizing or collecting treatment is performed on auxiliary yarns forming the warp-direction auxiliary yarn group.

9. A reinforcing fiber substrate according to any of claims 1 to 8, wherein, when a composite material having a reinforcing fiber volume fraction Vf of 53 to 65% is molded, the composite material satisfies at least two of the following properties (a) to (d):

   (a) a compressive strength at a room temperature after impact at an impact energy of 6.67 J/mm determined by a method defined in SACMA-SRM-2R-94 is 240 MPa or more;
   (b) a non-hole compressive strength at a room temperature using a laminate having a lamination structure defined in SACMA-SRM-3R-94 is 500 MPa or more;

(c) a 0° compressive strength at a room temperature determined by a method defined in SACMA-SRM-1R-94 is 1,350 MPa or more, and a 0° compressive strength at a high temperature after a hot/wet conditioning determined by the method is 1,100 MPa or more; and

(d) an open-hole compressive strength at a room temperature determined by a method defined in SACMA-SRM-3R-94 is 270 MPa or more, and an open-hole compressive strength at a high temperature after a hot/wet conditioning determined by the method is 215 MPa or more.

**10.** A reinforcing fiber substrate according to any of claims 1 to 9, wherein the substrate is a reinforcing fiber substrate used for vacuum assisted injection molding.

**11.** A reinforcing fiber substrate according to any of claims 1 to 10, wherein the substrate is used for formation of a preform in which a plurality of substrates are stacked and integrated.

**12.** A composite material obtainable by impregnating a matrix resin into a reinforcing fiber substrate (11), the substrate including a reinforcing fiber yarn group arranged with reinforcing fiber yarns (15) in parallel to each other in one direction and a weft-direction auxiliary yarn group formed by auxiliary yarns (13) extending in a direction across the reinforcing fiber yarns, **characterised by** the reinforcing fiber yarns being carbon fiber yarns with a yield in a range of 800 to 1700 tex, the weft-direction auxiliary yarns having a yield of 8 tex or less and which is no more than 1% of the yield of the reinforcing fiber yarn, a powder-like resin material (14) which does not cover the entire surface of the substrate is provided at 0.5 to 20% by weight at least on a surface of the reinforcing fiber substrate, and the reinforcing fiber volume fraction $V_f$ of the composite material calculated from a thickness of the composite material is in a range of 50 to 65%.

**13.** A composite material according to claim 12, wherein a maximum cross-sectional waviness of a layer of a reinforcing fiber substrate in a section of the composite material is 0.3 mm or less.

**14.** A composite material according to claim 12 or 13, wherein the cross-sectional area of the weft-direction auxiliary yarn is 1/50 or less of the cross-sectional area of the reinforcing fiber yarn.

**Patentansprüche**

**1.** Verstärkungsfasersubstrat (11) mit einer Verstärkungsfasergarngruppe, die so angeordnet ist, dass Verstärkungsfasergarne (15) parallel zueinander in einer Richtung angeordnet sind, und einer Schussrichtungs-Hilfsgarngruppe, die von Hilfsgarnen (13) gebildet ist, die sich in einer Richtung quer zu den Verstärkungsfasergarnen erstrecken, **dadurch gekennzeichnet, dass** die Verstärkungsfasergarne Kohlefasergarne mit einer Masse im Bereich von 800 bis 1.700 tex sind, die Schussrichtungs-Hilfsgarne eine Masse von 8 tex oder weniger und nicht mehr als 1 % der Masse des Verstärkungsfasergarns aufweisen und auf zumindest einer Oberfläche des Verstärkungsfasersubstrats ein pulverförmiges Harzmaterial (14) in einer Menge von 0,5 bis 20 Gew.-% bereitgestellt ist, das nicht die gesamte Oberfläche des Substrats bedeckt.

**2.** Verstärkungsfasersubstrat nach Anspruch 1, wobei das Substrat eine Kettenrichtungs-Hilfsgarngruppe aufweist, die von Hilfsgarnen (44) gebildet ist, die sich in einer Richtung parallel zu den Verstärkungsfasergarnen (42) erstrecken, und die Masse des Hilfsgarns, das die Kettenrichtungs-Hilfsgarngruppe bildet, nicht mehr als 20 % der Masse des Verstärkungsfasergarns beträgt.

**3.** Verstärkungsfasersubstrat nach einem der vorangegangenen Ansprüche, wobei das Substrat eine Kettenrichtungs-Hilfsgarngruppe aufweist, die von Hilfsgarnen gebildet ist, die sich in einer Richtung parallel zu den Verstärkungsfasergarnen erstrecken, auf jeder Oberfläche des Substrats eine Schussrichtungs-Hilfsgarngruppe bereitgestellt ist und das Substrat als unidirektionales, nichtgekräuseltes Gewebe ausgebildet ist, dessen Webstruktur durch Hilfsgarne, welche die Kettenrichtungs-Hilfsgarngruppe bilden, und Hilfsgarne, welche die Schussrichtungs-Hilfsgarngruppe bilden, gebildet ist.

**4.** Verstärkungsfasersubstrat nach einem der Ansprüche 1 bis 3, wobei der mittlere Spalt zwischen benachbarten Fasergarnen im Bereich von 0,1 bis 1 mm beträgt.

**5.** Verstärkungsfasersubstrat nach einem der Ansprüche 1 bis 4, wobei das Harzmaterial auf einer Oberfläche des Verstärkungsfasersubstrats verteilt ist, der mittlere Durchmesser der verteilten Harzmaterialpunkte auf der Oberfläche des Verstärkungsfasersubstrats von oben gesehen 1 mm oder weniger beträgt und die mittlere Höhe des verteilten Harzmaterials von der Oberfläche des Verstärkungsfasersubstrats weg im Bereich von 5 bis 250 pm liegt.

**6.** Verstärkungsfasersubstrat nach einem der Ansprüche 1 bis 5, wobei der Verstärkungsfaser-Volumsanteil $V_{pf}$ des Verstärkungsfasersubstrats, berechnet aus der Dicke des Verstärkungsfasersubstrat, die basierend auf JIS-R7602 bestimmt wurde, im Bereich von 40 bis 60 % liegt.

**7.** Verstärkungsfasersubstrat (81) nach einem der vorangegangenen Ansprüche, wobei Kettenrichtungs-Hilfsgarne (86), die eine konkave/konvexe Oberfläche aufweisen, zwischen Verstärkungsfasergarnen (85) angeordnet sind.

**8.** Verstärkungsfasersubstrat nach einem der Ansprüche 2 bis 7, wobei eine Schlicht- oder Vereinigungsbehandlung an den Hilfsgarnen durchgeführt wird, welche die Kettenrichtungs-Hilfsgarngruppe bilden.

**9.** Verstärkungsfasersubstrat nach einem der Ansprüche 1 bis 8, wobei, wenn ein Verbundmaterial mit einem Verstärkungsfaser-Volumsanteil Vf von 53 bis 65 % geformt wird, das Verbundmaterial zumindest zwei der folgenden Eigenschaften (a) bis (d) aufweist:

(a) eine Druckfestigkeit bei Raumtemperatur nach einem Schlag mit einer Schlagenergie von 6,67 J/mm, bestimmt mittels eines Verfahrens gemäß SACMA-SRM-2R-94, von 240 MPa oder mehr;
(b) eine Nichtloch-Druckfestigkeit bei Raumtemperatur unter Verwendung eines Laminats mit einer in SACMA-SRM-3R-94 definierten Laminatstruktur von 500 MPa oder mehr;
(c) eine 0˚-Druckfestigkeit bei Raumtemperatur, bestimmt mittels eines in SACMA-SRM-1 R-94 definierten Verfahrens, von 1.350 MPa oder mehr, und eine 0˚-Druckfestigkeit bei einer hohen Temperatur nach einer Heiß-Nass-Vorbehandlung, durch dasselbe Verfahren bestimmt, von 1.100 MPa oder mehr; und
(d) eine Durchgangsloch-Druckfestigkeit bei Raumtemperatur, bestimmt mittels eines in SACMA-SRM-3R-94 bestimmten Verfahrens, von 270 MPa oder mehr, und eine Durchgangsloch-Druckfestigkeit bei einer hohen Temperatur nach einer Heiß-Nass-Vorbehandlung, durch dasselbe Verfahren bestimmt, von 215 MPa oder mehr.

**10.** Verstärkungsfasersubstrat nach einem der Ansprüche 1 bis 9, wobei das Substrat ein Verstärkungsfasersubstrat ist, das zum vakuumgestützten Spritzgießen verwendet wird.

**11.** Verstärkungsfasersubstrat nach einem der Ansprüche 1 bis 10, wobei das Substrat zur Herstellung eines Vorformlings verwendet wird, in dem zahlreiche Substrate aufeinandergeschichtet und vereinigt sind.

**12.** Verbundmaterial, das durch Imprägnieren eines Verstärkungsfasersubstrats (11) mit einem Matrixharz erhältlich ist, wobei das Substrat eine Verstärkungsfasergruppe, die so angeordnet ist, dass Verstärkungsfasergarne (15) parallel zueinander in einer Richtung angeordnet sind, und eine Schussrichtungs-Hilfsgarngruppe umfasst, die von Hilfsgarnen (13) gebildet ist, die sich in einer Richtung quer zu den Verstärkungsfasergarnen erstrecken, **dadurch gekennzeichnet, dass** die Verstärkungsfasergarne Kohlefasergarne mit einer Masse im Bereich von 800 bis 1.700 tex sind, die Schussrichtungs-Hilfsgarne eine Masse von 8 tex oder weniger und nicht mehr als 1 % der Masse des Verstärkungsfasergarns aufweisen, auf zumindest einer Oberfläche des Verstärkungsfasersubstrats ein pulverförmiges Harzmaterial (14) in einer Menge von 0,5 bis 20 Gew.-% bereitgestellt ist, das nicht die gesamte Oberfläche des Substrats bedeckt, und der Verstärkungsfaser-Volumsanteil $V_{pf}$ des Verstärkungsfasersubstrats, berechnet aus der Dicke des Verstärkungsfasersubstrat, im Bereich von 50 bis 65 % liegt.

**13.** Verbundmaterial nach Anspruch 12, wobei die maximale Querschnittswelligkeit einer Schicht eines Verstärkungsfasersubstrats in einem Abschnitt des Verbundmaterials 0,3 mm oder weniger beträgt.

**14.** Verbundmaterial nach Anspruch 12 oder 13, wobei die Querschnittsfläche des Schussrichtungs-Hilfsgarns 1/50 oder weniger der Querschnittsfläche des Verstärkungsfasergarns beträgt.

**Revendications**

**1.** Substrat de fibres de renfort (11), ayant un groupe de fils de fibres de renfort agencé avec des fils de fibres de renfort (15) parallèles les uns aux autres dans une direction et un groupe de fils auxiliaires dans la direction de la trame, formé de fils auxiliaires (13) s'étendant dans une direction croisant les fils de fibres de renfort, **caractérisé**

**en ce que** les fils de fibres de renfort sont des fils de fibres de carbone ayant une limite élastique située dans la plage allant de 800 à 1700 tex, les fils auxiliaires dans la direction de la trame ont une limite élastique de 8 tex ou moins et ne dépassant pas 1 % de la limite élastique des fils de fibres de renfort, et un matériau résineux analogue à une poudre (14) qui ne couvre pas la surface totale du substrat est disposé à raison de 0,5 à 20 % en poids au moins sur une surface du substrat de fibres de renfort.

2. Substrat de fibres de renfort selon la revendication 1, lequel substrat a un groupe de fils auxiliaires dans la direction de la chaîne formé par des fils auxiliaires (44) s'étendant dans une direction parallèle aux fils de fibres de renfort (42), et la limite élastique des fils auxiliaires formant le groupe de fils auxiliaires dans la direction de la chaîne ne dépasse pas 20 % de la limite élastique des fils de fibres de renfort.

3. Substrat de fibres de renfort selon l'une quelconque des revendications précédentes, lequel substrat a un groupe de fils auxiliaires dans la direction de la chaîne formé par des fils auxiliaires s'étendant dans une direction parallèle aux fils de fibres de renfort, un groupe de fils auxiliaires dans la direction de la trame est disposé sur chaque surface du substrat, et le substrat est formé comme une étoffe tissée non frisée unidirectionnelle, dont la structure d'armure est formée par des fils auxiliaires formant le groupe de fils auxiliaires dans la direction de la chaîne et des fils auxiliaires formant le groupe de fils auxiliaires dans la direction de la trame.

4. Substrat de fibres de renfort selon l'une quelconque des revendications 1 à 3, dans lequel l'espace moyen entre des fils de fibres de renfort adjacents est situé dans la plage allant de 0,1 à 1 mm.

5. Substrat de fibres de renfort selon l'une quelconque des revendications 1 à 4, dans lequel le matériau de résine forme des ergots sur une surface du substrat de fibres de renfort, le diamètre moyen du matériau de résine formant des ergots sur la surface du substrat de fibres de renfort, en vue en plan, est de 1 mm ou moins, et la hauteur moyenne du matériau de résine formant des ergots depuis la surface du substrat de fibres de renfort est située dans la plage allant de 5 à 250 $\mu$m.

6. Substrat de fibres de renfort selon l'une quelconque des revendications 1 à 5, dans lequel la fraction en volume des fibres de renfort $V_{pf}$ du substrat de fibres de renfort, calculée à partir de l'épaisseur du substrat de fibres de renfort qui est déterminée sur la base de la norme JIS-R7602, est située dans la plage allant de 40 à 60 %.

7. Substrat de fibres de renfort (81) selon l'une quelconque des revendications précédentes, dans lequel des fils auxiliaires dans la direction de la chaîne (86) qui ont une surface concave/convexe sont disposés entre des fils de fibres de renfort (85).

8. Substrat de fibres de renfort selon l'une quelconque des revendications 2 à 7, dans lequel un traitement d'encollage ou de collecte est effectué sur des fils auxiliaires formant le groupe de fils auxiliaires dans la direction de la chaîne.

9. Substrat de fibres de renfort selon l'une quelconque des revendications 1 à 8, dans lequel, quand un matériau composite ayant une fraction en volume de fibres de renfort Vf de 53 à 65 % est moulé, le matériau composite satisfait à au moins deux des propriétés (a) à (d) suivantes

(a) la résistance à la compression à la température ambiante après un choc avec une énergie de frappe de 6,67 J/mm, déterminée par un procédé défini dans la norme SACMA-SRM-2R-94, est de 240 MPa ou plus ;
(b) la résistance à la compression en l'absence de trou à la température ambiante utilisant un stratifié ayant une structure de stratification définie dans la norme SACMA-SRM-3R-94 est de 500 MPa ou plus ;
(c) la résistance à la compression avec un angle de 0° à la température ambiante, déterminée par un procédé défini dans la norme SACMA-SRM-1R-94, est de 1350 MPa ou plus, et la résistance à la compression avec un angle de 0° à température élevée après un conditionnement chaud/ humide, déterminée par ce procédé, est de 1100 MPa ou plus ; et
(d) la résistance à la compression avec trous découverts à la température ambiante, déterminée par un procédé défini dans la norme SACMA-SRM-3R-94, est de 270 MPa ou plus, et la résistance à la compression avec trous découverts à température élevée après un conditionnement chaud/humide, déterminée par ce procédé, est de 215 MPa ou plus.

10. Substrat de fibres de renfort selon l'une quelconque des revendications 1 à 9, lequel substrat est un substrat de fibres de renfort utilisé pour un moulage par injection assisté sous vide.

**11.** Substrat de fibres de renfort selon l'une quelconque des revendications 1 à 10, lequel substrat est utilisé pour la formation d'une ébauche dans laquelle une pluralité de substrats sont empilés et intégrés.

**12.** Matériau composite pouvant être obtenu par imprégnation d'une résine de matrice dans un substrat de fibres de renfort (11), le substrat comprenant un groupe de fils de fibres de renfort agencé avec des fils de fibres de renfort (15) parallèles les uns aux autres dans une direction et un groupe de fils auxiliaires dans la direction de la trame, formé de fils auxiliaires (13) s'étendant dans une direction croisant les fils de fibres de renfort, **caractérisé en ce que** les fils de fibres de renfort sont des fils de fibres de carbone ayant une limite élastique située dans la plage allant de 800 à 1700 tex, les fils auxiliaires dans la direction de la trame ont une limite élastique de 8 tex ou moins et ne dépassant pas 1 % de la limite élastique des fils de fibres de renfort, un matériau résineux analogue à une poudre (14) qui ne couvre pas la surface totale du substrat est disposée à raison de 0,5 à 20 % en poids au moins sur une surface du substrat de fibres de renfort, et la fraction en volume des fibres de renfort $V_f$ du matériau composite, calculée à partir de l'épaisseur du matériau de renfort, est située dans la plage allant de 50 à 65 %.

**13.** Matériau composite selon la revendication 12, dans lequel l'ondulation maximale en section transversale d'une couche d'un substrat de fibres de renfort dans une section du matériau composite est de 0,3 mm ou moins.

**14.** Matériau composite selon la revendication 12 ou 13, dans lequel la surface en section transversale du fil auxiliaire dans la direction de la trame est de 1/50 ou moins de la surface en section transversale du fil de fibres de renfort.

FIG. 1

FIG. 2

FIG. 3

# FIG. 4

# FIG. 5

FIG. 6

FIG. 7

FIG. 8

FIG. 9

FIG. 10

83

89

85

86

FIG. 11

84

90

85

86

FIG. 12

FIG. 13

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001226850 A
- JP 2002249984 A
- JP 59209847 A

- US 5071711 A
- JP 8158665 A
- EP 0909845 A

**Non-patent literature cited in the description**

- *Journal of Advanced Materials,* July 2000, vol. 32 (3), 27-34

- *Composites part A.,* 2001, vol. 32, 721-729